(19) Europäisches Patentamt / European Patent Office / Office européen des brevets

(11) **EP 1 564 714 B1**

(12) **EUROPEAN PATENT SPECIFICATION**

(45) Date of publication and mention
of the grant of the patent:
**04.03.2015 Bulletin 2015/10**

(51) Int Cl.:
***G09G 3/36*** *(2006.01)*

(21) Application number: **05250294.5**

(22) Date of filing: **21.01.2005**

(54) **Display device, liquid crytal monitor, liquid crystal television receiver, and display method**

Anzeigegerät, Flüssigkristallanzeige, Flüssigkristall-Fernsehempfänger, und Anzeigeverfahren

Dispositif d'affichage, moniteur à cristaux liquides, téléviseur à cristaux liquides, et méthode d'affichage

(84) Designated Contracting States:
**DE GB**

(30) Priority: **21.01.2004 JP 2004013391**
**20.01.2005 JP 2005012329**

(43) Date of publication of application:
**17.08.2005 Bulletin 2005/33**

(73) Proprietor: **Sharp Kabushiki Kaisha**
**Osaka-shi, Osaka 545-8522 (JP)**

(72) Inventors:
• **Miyata, Hidekazu**
**Nagoya-shi,**
**Aichi 458-0025 (JP)**
• **Ishihara, Tomoyuki**
**Tenri-shi,**
**Nara 632-0073 (JP)**
• **Tomizawa, Kazunari**
**Soraku-gun,**
**Kyoto 619-0224 (JP)**

(74) Representative: **Treeby, Philip David William et al**
**RGC Jenkins & Co.**
**26 Caxton Street**
**London SW1H 0RJ (GB)**

(56) References cited:
EP-A- 1 553 553          US-A- 5 923 310
US-A1- 2002 036 625      US-A1- 2003 006 952
US-A1- 2003 146 893      US-A1- 2003 227 429

**Description**

This application claims priority on Patent Application No. 2004/013391 filed in Japan on January 21, 2004 and on Patent Application No. 2005/12329 filed in Japan on January, 20 2005.

FIELD OF THE INVENTION

The present invention generally relates to a display device for displaying an image. Preferably, it relates to a display device displaying by using first and second sub-frames obtained by dividing a single frame.

BACKGROUND OF THE INVENTION

In recent years, a liquid crystal display device, particularly a color liquid crystal display device including a TN mode liquid crystal display panel (TN mode liquid crystal panel, TN panel), has come to be commonly used in a field where a CRT (Cathode Ray Tube) has been used.

For example, document 1 (listed hereafter) discloses a liquid crystal display device that switches driving methods of a TN panel in accordance with whether an image to be displayed is a video image or a still image.

Incidentally, such a TN panel has a problem in its viewing angle property, as compared with a CRT.

As a viewing angle (angle with respect to the panel; an angle with respect to a normal direction of the panel) becomes wider, a gradation property varies. Accordingly, there occurs gradation reverse at some angles.

In light of this, what have been conventionally developed are (i) a technique for improving the viewing angle property by using an optical film and (ii) a technique for restraining the gradation reverse by devising display methods.

For example, disclosed in each of documents 2 and 3 (listed hereafter) is a method for improving the viewing angle by dividing a single frame so that a plurality of signal writings are carried out with respect to one pixel, and by combining the voltage levels of the signal writings.

Further, a liquid crystal display panel such as a TV (television receiver) requires a wide viewing angle. Therefore, for acquirement of the wide viewing angle, such a liquid crystal display panel adopts a liquid crystal of the IPS (In-Plane-Switching) mode, the VA (Vertical Alignment) mode, or the like, instead of the TN mode.

For example, a liquid crystal panel (VA panel) adopting the VA mode realizes a contrast of 10 or greater at an angle of 170° or less vertically and horizontally with respect to the VA panel, and prevents the gradation reverse.

Document 1: Japanese Laid-Open Patent Publication Tokukai 2002-23707 (published on January 25, 2002);
Document 2: Japanese Laid-Open Patent Publication Tokukaihei 05-68221/1993 (published on March 19, 1993);
Document 3: Japanese Laid-Open Patent Publication Tokukai 2001-296841 (published on October 26, 2001);
Document 4: Japanese Laid-Open Patent Publication Tokukai 2004-78157 (published on March 11, 2004);
Document 5: Japanese Laid-Open Patent Publication Tokukai 2003-295160 (published on October 15, 2003);
Document 6: Japanese Laid-Open Patent Publication Tokukai 2004-62146 (published on February 26, 2004);
Document 7: Japanese Laid-Open Patent Publication Tokukai 2004-258139 (published on September 16, 2004); and
Document 8: Color Science Handbook, second edition, (University of Tokyo Press; published on June 10, 1998).

However, even the VA panel which is thought to realize a wide viewing angle, cannot completely eliminate variation in the gradation property, due to variation in the viewing angle. For example, the wider the viewing angle is in a horizontal direction, the more the gradation property is deteriorated.

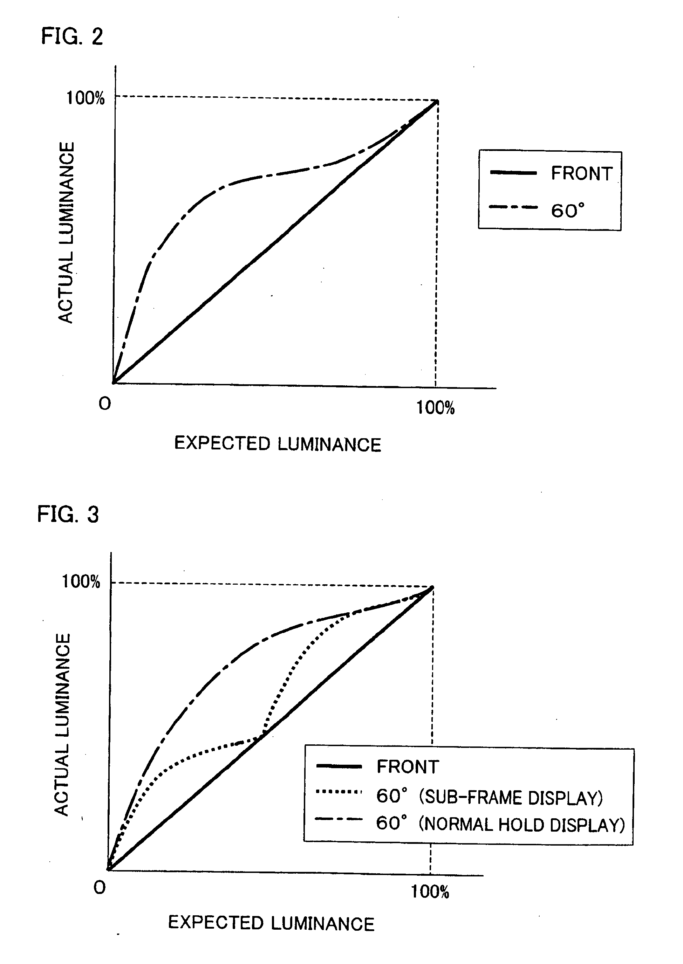

That is, as illustrated in Fig. 2, when changing the viewing angle from 0 DEG (front of the panel) to 60 DEG , a gradation gamma property accordingly varies, thereby causing such an excess brightness phenomenon that a luminance in halftone becomes excessively high.

Also in a liquid crystal display panel adopting the IPS mode, its gradation property varies to some extent as the viewing angle is wider though the variation of the gradation property depends on how an optical characteristic of an optical film is designed.

US2003/006952 discloses a method and apparatus for driving a liquid crystal display that is capable of improving the viewing angle by converting a gray scale having poor viewing angle characteristics into a gray scale combination having good viewing angle characteristics. The grayscale with poor viewing angle characteristics is time-divided into at least two grayscales with good viewing angle characteristics and the liquid crystal display is driven, thereby improving the viewing angle.

SUMMARY OF THE INVENTION

An embodiment of the present invention was made with the foregoing conventional problem in mind. Further, an object of an embodiment of the present invention is to provide a display device which can suppress the excess brightness.

A liquid crystal display device wherein a single frame is divided into first and second sub-frames so as to display an image, is provided in accordance with an embodiment of the present invention, said display device is characterized by including: a display section for displaying an image whose luminance is based on a luminance gradation of a display signal; and a control section for generating a first display signal in the first sub-frame and a second display signal in the second sub-frame so that division of the frame does not vary a total luminance outputted from the display section in a single frame, and for outputting the first and second display signals to the display section, wherein the control section is adapted to adjust a luminance gradation of the first display signal and set a luminance gradation of the second display signal to a minimum value or a value smaller than a first predetermined value to display an image whose brightness is relatively low, and the control section is adapted to set the luminance gradation of the first display signal to a maximum value or a value larger than a second predetermined value and adjust the luminance gradation of the second display signal to display an image whose brightness is relatively high, characterised in that the control section is adapted to divide the frame so that a ratio of a period corresponding to the first sub-frame and a period corresponding to the second sub-frame is 1 : n, wherein n is a real number more than 1, and the period corresponding to the second sub-frame is longer than the period corresponding to the first sub-frame.

An embodiment of the present display device displays an image by using the display section provided with a display screen such as a liquid crystal panel.

Further, an embodiment of the present display device drives the display section by carrying out sub-frame display. Here, the sub-frame display is a display method in which a single frame is divided into a plurality of (in the present display device, m number of) sub-frames (the first to m-th sub-frames) so as to display an image.

That is, the control section outputs display signals to the display section m times (sequentially outputs the first to m-th display signals which are display signals in the first to m-th sub frames).

On this account, the control section turns ON all gate lines of the display screen of the display section once in each sub-frame period (turns ON the gate line m times in each frame).

Further, in one exemplary embodiment, the control section obtains an output frequency (clock) of each display signal by multiplying a normal hold display output frequency by m (obtains an m-fold clock).

Note that, the normal hold display is normal display which is carried out without dividing a single frame into sub-frames (display which is carried out by turning ON all gate lines of the display screen only once in each frame period).

Further, the display section (display screen) is designed so as to display an image whose luminance is based on a luminance gradation of the display signal that has been inputted from the control section.

Further, the control section generates the first to m-th display signals (sets luminance gradations of these display signals) so that division of the frame does not vary a total luminance (entire luminance) outputted from the screen in a single frame.

Normally, in the display screen of the display section, a difference (brightness difference) between an actual brightness and an expected brightness at a wide viewing angle is sufficiently small in case of setting a brightness (and a luminance) of the image to "a minimum value or a value smaller than a first predetermined value" or "a maximum value or a value larger than a second predetermined value".

Here, it is natural that the brightness difference can be made smallest in case where the luminance gradation is minimum or maximum. However, actually, it is found that it is possible to obtain the same effect merely by bringing the luminance gradation close to minimum or maximum (for example, merely setting the luminance gradation to not more than 0.02% or more than 80% of the maximum).

Here, the "brightness" refers to, for example, a degree of brightness sensed by a human according to a luminance of a displayed image (see equations (5) and (6) in embodiments described later). Note that, in case where a total luminance obtained in a single frame does not vary, also a brightness obtained in a single frame does not vary.

Further, the "expected brightness" refers to, for example, a brightness that should be displayed in a displayed image (a value corresponding to a luminance gradation of the display signal).

Further, the "actual brightness" refers to, for example, a brightness actually displayed in the image, and is a value which varies depending on a viewing angle. In front of the image, the actual brightness and the expected brightness are equal with each other, so that there is no brightness difference. Meanwhile, the brightness difference is larger as the viewing angle is wider.

Further, in an embodiment of the present display device, when displaying an image, the control section sets a luminance gradation of at least one of the first to m-th display signals to "a minimum value or a value smaller than a first predetermined value" or "a maximum value or a value larger than a second predetermined value", and adjusts a luminance gradation of each of other display signals, so as to carry out the gradation expression.

Thus, it is possible to sufficiently reduce the brightness difference in at least a single sub-frame. On this account, an embodiment of the present display device can suppress the brightness difference as compared with the case of carrying out the normal hold display, so that it is possible to improve the viewing angle property. Thus, it is possible to favorably suppress the excess brightness.

For a fuller understanding of the nature and advantages of the invention, reference should be made to the ensuing detailed description taken in conjunction with the accompanying drawings.

BRIEF DESCRIPTION OF THE DRAWINGS

Fig. 1 is a block diagram illustrating an arrangement of a display device according to one embodiment of the present invention.

Fig. 2 is a graph illustrating a display luminance (a relationship between an expected luminance and an actual luminance) outputted from a liquid crystal panel in case of normal hold display.

Fig. 3 is a graph illustrating, as a non-claimed example, a display luminance (a relationship between an expected luminance and an actual luminance) outputted from the liquid crystal panel in case of carrying out sub-frame display in the display device illustrated in Fig. 1.

Fig. 4 illustrates an image signal inputted to a frame memory of the display device illustrated in Fig. 1, and illustrates an image signal outputted from the frame memory to a former stage LUT and an image signal outputted from the frame memory to a latter stage LUT in case of dividing a frame at 3 : 1.

Fig. 5 illustrates timings at which a gate line concerning a former stage display signal is turned ON and a gate line concerning a latter stage display signal is turned ON in case of dividing the frame at 3 : 1 in the display device illustrated in Fig. 1.

Fig. 6 is a graph illustrating a brightness obtained by converting the luminance graph illustrated in Fig. 3.

Fig. 7 is a graph illustrating a relationship between an expected brightness and an actual brightness in case of dividing the frame at 3 : 1 in the display device illustrated in Fig. 1.

Fig. 8 illustrates a display device obtained by partially varying the arrangement of the display device illustrated in Fig. 1.

Figs. 9(a) and 9(b) are graphs each of which illustrates how a polarity of an inter-electrode voltage is varied at a frame cycle.

Figs. 10(a) through 10(c) are graphs each of which illustrates a response speed of liquid crystal.

Fig. 11 is a graph illustrating a display luminance (a relationship between an expected luminance and an actual luminance) outputted from the liquid crystal panel in case of carrying out the sub-frame display by using liquid crystal whose response speed is low.

Fig. 12(a) is a graph illustrating luminances obtained in a former sub-frame and a latter sub-frame in case where the display luminance is 3/4 and in case where the display luminance is 1/4 of Lmax. Fig. 12(b) is a graph illustrating transition of a voltage (liquid crystal voltage) applied to the liquid crystal in case where polarities of the voltage are differentiated from each other at a sub-frame cycle.

Figs. 13(a) and 13(b) are graphs each of which illustrates how to vary the polarity of the inter-electrode voltage at a frame cycle.

Figs. 14(a) through 14(d) are graphs each of which illustrates four pixels of the liquid crystal panel and the polarity of the liquid crystal voltage in each pixel.

Fig. 15 illustrates an arrangement of the liquid crystal panel driven with each pixel divided.

Figs. 16(a) and 16(c) are graphs each of which illustrates a voltage (liquid crystal voltage) applied to a liquid crystal capacitor of a sub-pixel in case where a positive (≥Vcom) display signal is applied to a source line S. Further, Figs. 16(b) and 16(d) are graphs each of which illustrates a voltage (liquid crystal voltage) applied to the liquid crystal capacitor of the sub-pixel in case where a negative (≤Vcom) display signal is applied to the source line S.

Fig. 17 is a graph illustrating a relationship between transmissivity and an applied voltage of a liquid crystal panel 21 viewed at two viewing angles (0° (front) and 60°) in case where the pixel-division driving is not carried out.

Fig. 18(a) is a graph illustrating how the liquid crystal voltage (corresponding to a single pixel) varies in case of carrying out the sub-frame display while reversing the polarity of the liquid crystal voltage in each frame. Fig. 18(b) is a graph illustrating a liquid crystal voltage in a sub-pixel (bright pixel) whose luminance becomes high in the pixel-division driving. Further, Fig. 18(c) is a graph illustrating a liquid crystal voltage in a sub-pixel (dark pixel) whose luminance becomes low in the pixel-division driving.

Figs. 19(a) and 19(b) are graphs, corresponding to Figs. 18(a) and 18(b), which respectively illustrate a luminance of the bright pixel and a luminance of the dark pixel.

Figs. 20(a) and 20(b) are graphs which respectively illustrate a luminance of the bright pixel and a luminance of the dark pixel in case of carrying out polarity reverse at a frame cycle.

Fig. 21 is a graph illustrating a result (indicated by a broken line and a continuous line) of display carried out by combining the polarity-reverse driving with the pixel-division driving and a result (indicated by a chain line and a continuous line) of the normal hold display.

Figs. 22(a) and 22(b) are graphs which respectively illustrate a luminance of the bright pixel and a luminance of the dark pixel in case of carrying out the polarity reverse at a sub-frame cycle.

Fig. 23 is a graph illustrating a result (indicated by a broken line and a continuous line) of display carried out by evenly dividing a single frame into three sub-frames and a result (indicated by a chain line and a continuous line) of the normal hold display.

Fig. 24 is a graph illustrating transition of a liquid crystal voltage in case where a frame is divided into three and a voltage polarity is reversed in each frame.

Fig. 25 is a graph illustrating transition of the liquid crystal voltage in case where a frame is divided into three and a voltage polarity is reversed in each sub-frame.

Fig. 26 is a graph for illustrating a relationship (viewing angle gradation property actual measurement) between a signal gradation (%: luminance gradation of a display signal) outputted to the display section 14 and an actual luminance gradation (%) according to each signal gradation in a sub-frame where the luminance is not adjusted.

DESCRIPTION OF THE EMBODIMENTS

One embodiment of the present invention will be described below.

A liquid crystal display device (present display device) according to the present embodiment includes a liquid crystal panel that adopts the vertical alignment (VA) mode and that is divided into a plurality of domains.

The present display device serves as a liquid crystal monitor displaying an image based on an image signal, sent from outside, on the liquid crystal display panel.

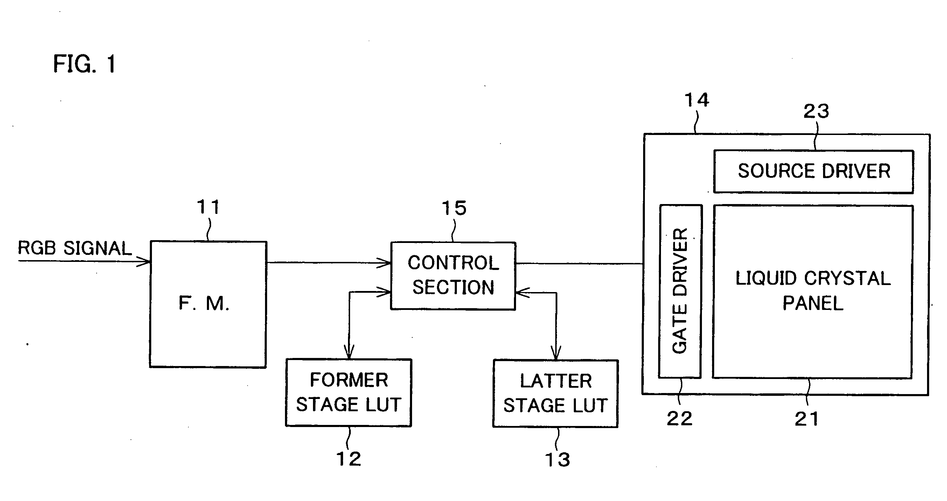

Fig. 1 is a block diagram illustrating an inside structure of the present display device.

As illustrated in Fig. 1, the present display device includes a frame memory (F.M.) 11, a former stage LUT 12, a latter stage LUT 13, a display section 14, and a control section 15.

The frame memory (image signal input section) 11 accumulates image signals (RGB signals), sent from an outer signal source, that correspond to a single frame.

Each of the former stage LUT (look-up table) 12 and the latter stage LUT 13 is a relation table (conversion table) indicative of a relationship between (i) each of the image signals sent from outside and (ii) each of display signals to be sent to the display section 14.

Note that, the present display device carries out a sub-frame display. Here, the sub-frame display refers to a way of a display using a plurality of sub-frames obtained by dividing a single frame.

In other words, the present display device is designed so as to carry out a display in accordance with the image signals, inputted during a single frame period, that correspond to a single frame, and so as to carry out a display at a frequency twice as large as a frequency of each image signal by using two sub-frames whose sizes (periods) are the same.

The former stage LUT 12 is the relation table for a display signal (former stage display signal; second display signal) outputted in a former stage sub-frame (front sub-frame; second sub-frame). The latter stage LUT 13 is the relation table for a display signal (latter stage display signal; first display signal) outputted in a latter stage sub-frame (latter sub-frame; first sub-frame).

The display section 14 includes a liquid crystal panel 21, a gate driver 22, and a source driver 23 as illustrated in Fig. 1, and displays an image in accordance with the received displaying signals.

Here, the liquid crystal panel 21 is an active matrix (TFT) liquid crystal panel adopting the VA mode.

The control section 15 is a central section of the present display device, and controls all the operations in the present display device. The control section 15 generates the display signals based on the image signals accumulated in the frame memory 11, by using the former stage LUT 12 and the latter stage LUT13. Then, the control section 15 sends the generated display signals to the display section 14.

Namely, the control section 15 accumulates, in the frame memory 11, the image signals sent at a normal output frequency (normal clock; for example, 25MHz). Then, the control section 15 outputs each of the image signals from the frame memory 11twice at a clock (doubled clock; 50MHz) twice as high as the normal clock.

Then, the control section 15 generates the former stage display signal, in accordance with the image signal firstly outputted, by using the former stage LUT 12. Thereafter, the control section 15 generates the latter stage display signal, in accordance with the image signal secondly outputted, by using the former stage LUT 13. The control section 15 sequentially sends, at a doubled clock, the display signals to the display section 14.

On this account, the display section 14 displays two different images, one at a time during the single frame period in accordance with the display signals. In other words, all the gate lines in the liquid crystal liquid crystal panel 21 turn ON once during each of the sub-frame periods.

Note that, operation for outputting the display signals will be described in detail later.

Here, how the control section 15 generates the former stage and latter stage display signals is explained as follows.

Firstly explained is a general display luminance (luminance of an image displayed on a panel) in the liquid crystal display panel.

In case of displaying an image based on ordinary 8-bit data by using a single frame instead of the sub-frames (in case of carrying out a normal hold display, i.e., in case of turning ON all the gate lines in the liquid crystal panel only once during a single frame period), a luminance gradation (signal gradation) of the display signal falls within a range from 0 to 255.

The signal gradation and the display luminance in the liquid crystal panel are approximately expressed by the following equation (1):

(a)

$$((T - T0) \ / \ (Tmax - T0)) = (L \ / \ Lmax) \ \hat{} \ \gamma \ \cdots(1)$$

In the equation (1), L indicates the signal gradation (frame gradation) in the case of displaying image in the single frame (in the case of displaying an image in accordance with the normal hold display); Lmax indicates a maximum luminance gradation (255); T indicates a display luminance; Tmax indicates a maximum luminance (luminance when L = Lmax = 255 is satisfied; white); T0 indicates a minimum luminance (luminance when L is 0; black); and $\gamma$ is a correction value (normally, 2.2).

Note that, T0 is not actually 0 in the liquid crystal panel 21, however, for ease of explanation, the following description assumes that T0 is 0.

Further, the display luminance T to be obtained in the liquid crystal panel 21 is illustrated in a graph of Fig. 2.

A horizontal axis of the graph indicates "a luminance (expected luminance; value that corresponds to the signal gradation; equivalent to the display luminance T) which is supposed to be obtained." A vertical axis of the graph indicates "a luminance (actual luminance) that is actually obtained."

In this case, in front of the liquid crystal panel 21 (i.e., at a viewing angle of 0°), the expected luminance and the actual luminance are equal to each other as illustrated in the graph.

However, at a viewing angle of 60°, the actual luminance seems to become higher in a halftone luminance due to a change in a gradation $\gamma$ property.

Next, the display luminance in the present display device is explained.

In the present display device, the control section 15 is designed so as to carry out the gradation expression while satisfying the following conditions (a) and (b):

(a) "a total (integrated luminance in the single frame) of (i) the luminance (display luminance) of the image displayed in the former sub-frame by the display section 14 and (ii) the luminance (display luminance) of the image displayed in the latter sub-frame by the display section 14 is equal to the display luminance in the single frame in the case of carry out the normal hold display," and
(b) "one of the sub-frames is set to be black (minimum luminance) or white (maximum luminance)."

In order to satisfy the conditions (a) and (b), the present display device is designed so that: the control section 15 divides a single frame into two sub-frames, and uses one of the sub-frames so as to display an image whose luminance is not more than the half of the maximum luminance.

That is, when outputting an image whose luminance is not more than the half (threshold luminance; Tmax/2) of the maximum luminance in a single frame (i.e., when the luminance is low), the control section 15 sets the luminance in the former sub-frame to be the minimum luminance (black) and adjusts only the display luminance in the latter sub-frame so as to carry out the gradation expression. In other words, when the luminance is low, the control section 15 carries out the gradation expression by using only the latter sub-frame.

In this case, the integrated luminance in the frame is represented by the following equation: "(the minimum luminance + the luminance in the latter sub-frame) / 2."

Further, when outputting an image whose luminance is higher than the threshold luminance (i.e., when the luminance is high), the control section 15 sets the luminance in the latter sub-frame to be the maximum luminance (white) and adjusts the display luminance in the former sub-frame so as to carry out the gradation expression.

In this case, the integrated luminance in the frame is represented by the following equation: "(the luminance in the former sub-frame + the maximum luminance) / 2."

The following description specifically explains a signal gradation setting carried out with respect to the display signals (the former stage display signal and the latter stage display signal) for acquirement of such display luminance.

Note that, the signal gradation setting is carried out by the control section 15 illustrated in Fig. 1.

The control section 15 calculates, in advance, a frame gradation that corresponds to the threshold luminance (Tmax/2) by using the aforementioned equation (1).

That is, the frame gradation (threshold luminance gradation; Lt) that corresponds to such display luminance is found in accordance with the equation (1):

(a)

$$Lt = 0.5 \wedge (1 / \gamma) \times Lmax \cdots (2)$$

and,

(b)

$$Lmax = Tmax \wedge \dot{\gamma} \cdots (2a).$$

Further, in displaying an image, the control section 15 determines a frame gradation L in accordance with the image signal sent from the frame memory 11.

When L is equal to or smaller than Lt, the control section 15 sets the luminance gradation (F) of the former display signal to be the minimum value (0) by using the former stage LUT 12.

Meanwhile, the control section 15 sets, in accordance with the equation (1), the luminance gradation (R) of the latter stage display signal by using the latter stage LUT 13 so that the luminance gradation R satisfies the following equation (3).

(a)

$$R = 0.5 \wedge (1 / \gamma) \times L \cdots (3)$$

When the frame gradation L is larger than Lt, the control section 15 sets the luminance gradation R of the latter display signal to be the maximum value (255).

Meanwhile, the control section 15 carries out a setting in accordance with the equation (1) so that the luminance gradation F of the former sub-frame satisfies the following equation (4).

(a)

$$F = (L \wedge \gamma - 0.5 \times Lmax \wedge \gamma) \wedge (1/\gamma) \cdots (4)$$

Next, the following description explains, more in detail, the operation for outputting the display signals in the present display device. Note that, the following description assumes the number of pixels in the liquid crystal panel 21 is a × b.

In this case, the control section 15 accumulates, in a source driver 23 at the doubled clock, the former stage display signals that correspond to a-number of pixels in a first gate line.

Then, the control section 15 causes the gate driver 22 to turn ON the first gate line so that the former stage display signals are written in the pixels in the first gate line. Thereafter, the control section 23 sequentially accumulates, in the source driver 23, the former stage display signals that respectively correspond to second to b-th gate lines, and sequentially turns ON the second to the b-th gate lines at a doubled clock. On this account, it is possible to write the former stage display signals in all the pixels during a period (1/2 frame period) that corresponds to the half of the frame.

Further, the control section 15 carries out a similar operation during the other 1/2 frame period so as to write the latter stage display signals in the pixels of all the gate lines.

On this account, a length of time (1/2 frame period) for writing each of the former stage display signals in each pixel is equal to that (1/2 frame period) for writing each of the latter stage display signals in each pixel.

Fig. 3 illustrates (i) a result (indicated by a broken line and a continuous line) in case where the sub-frame display is carried out, that is, in case where the former stage display signals are written during the former sub-frame period and the latter stage display signals are written during the latter sub-frame period and (ii) the result (indicated by a chain line and the continuous line) illustrated in Fig. 2.

As illustrated in Fig. 2, the liquid crystal panel 21 of the present display device is such a liquid crystal display panel that the difference between (i) the actual luminance and (ii) the expected luminance (equal to a luminance indicated by the continuous line) at the wide viewing angle is minimum (0) when the display luminance is minimum or maximum, and that the difference therebetween is largest in a half-tone luminance (in the vicinity of the threshold luminance).

Further, the present display device carries out the sub-frame display, which uses the sub-frames obtained by dividing the frame.

Moreover, according to a non-claimed example, the present display device sets two sub-frame periods to be equal with each other. When the luminance is low, the present display device carries out the black display in the former sub-frame and uses only the latter sub-frame so that the integrated luminance in the single frame is not varied, thereby displaying an image.

Accordingly, the difference between the actual luminance and the expected luminance becomes minimum in the former sub-frame. Therefore, the total difference in the former sub-frame and in the latter sub-frame is reduced approximately by half as illustrated by the broken line in Fig. 3.

Meanwhile, when the luminance is high, the present display device carries out the white display in the latter sub-frame and adjusts only the former sub-frame so that the integrated luminance in the single frame is not varied, thereby displaying an image.

Accordingly, also in this case, the difference between the actual luminance and the expected luminance becomes minimum in the latter sub-frame. Therefore, the total difference in the former sub-frame and in the latter sub-frame is reduced approximately by half as illustrated by the broken line in Fig. 3.

In this way, the whole difference in the present display device can be reduced approximately by half as compared with the arrangement that carries out the normal hold display (the arrangement that displays an image by using a single frame instead of the sub-frames).

This restrains such a phenomenon (excess brightness phenomenon; see Fig. 2) that an image in halftone luminance becomes bright and pale.

Note that, in the present non-claimed embodiment, the period that corresponds to the former sub-frame is identical to the period that corresponds to the latter sub-frame. This is because one of the sub-frames is used to display an image whose luminance is not more than the half of the maximum luminance.

However, in the claimed embodiment, the sub-frame periods are be set to be values different from each other.

That is, the problematic excess brightness phenomenon in the present display device is such a phenomenon that an image in the halftone luminance becomes bright and pale because the actual luminance at the wide viewing angle has the property illustrated in Fig. 2.

Normally, an image picked up by a camera is converted into a signal based on a luminance. In case where the image is transmitted in a digital form, the image is converted into a display signal by using the correction value $\gamma$ mentioned in the equation (1)(that is, a value of the luminance is multiplied by $(1/\gamma)$ and thus multiplied value is equally divided so as to obtain a gradation).

On this account, an image displayed by a display device such as a liquid crystal panel in accordance with such a display signal has the display luminance determined by the equation (1).

Incidentally, a human visual sense recognizes an image as brightness rather than luminance. Moreover, the brightness (psychometric lightness) M can be expressed by the following equations (5) and (6) (see Document 8).

$$M = 166 \times Y^{(1/3)} - 16, Y > 0.008856 \cdots (5)$$

$$M = 903.29 \times Y, Y \le 0.008856 \cdots (6)$$

Here, Y is equivalent to the aforementioned actual luminance, and is an amount satisfying Y = (y/yn). Note that, y indicates a y-value of tristimulus values of arbitrary xyz color systems, and yn indicates a y-value based on average light of a perfect reflecting diffuser and is determined so as to satisfy yn = 100.

These equations represent such a tendency that a human is sensitive to an image which is dark in terms of luminance, and becomes insensitive to an image which is bright in terms of luminance.

Further, it is considered that a human takes the excessive brightness as difference in brightness rather than difference in luminance.

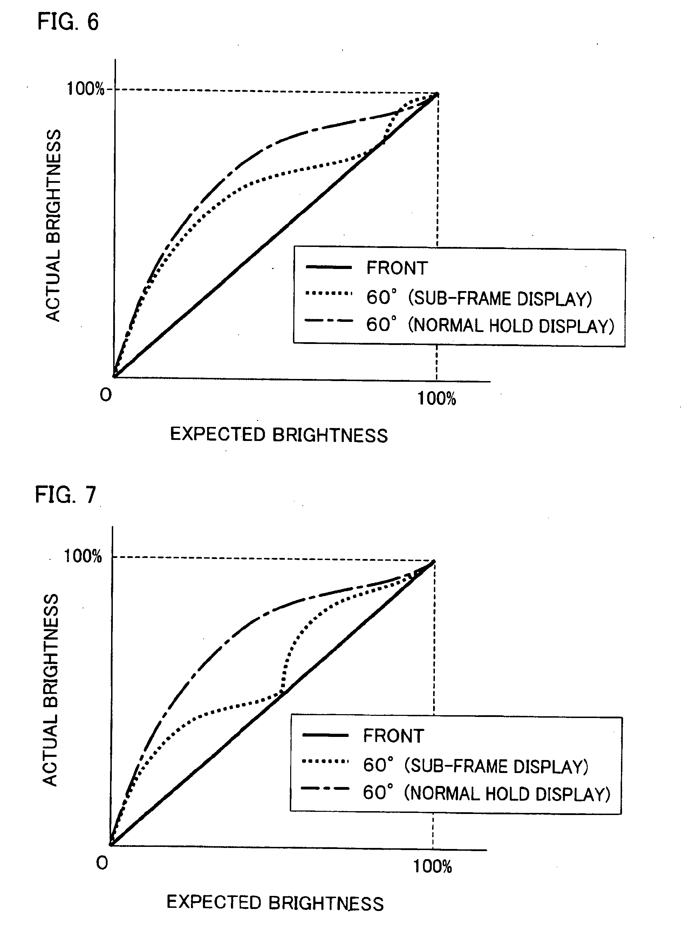

Here, Fig. 6 is a graph illustrating brightness converted from the luminance illustrated in the graph of Fig. 3.

A horizontal axis of the graph indicates "brightness (expected brightness; value that corresponds to the signal gradation; equivalent to the psychometric lightness M) supposed to be obtained." A vertical axis of the graph indicates "brightness (actual brightness) that is actually obtained."

As illustrated by a broken line in the graph, the expected brightness and the actual brightness are equal to each other in front of the liquid crystal panel 21 (i.e., at a viewing angle of 0°).

Meanwhile, in a case where the viewing angle is 60° and the sub-frame periods are equal to each other (i.e., one of the sub-frames is used to display an image whose luminance is not more than the maximum value), the difference between the actual brightness and the expected brightness is improved as compared with the conventional case of carrying out the normal hold display. Therefore, restraint of the excess brightness phenomenon is achieved to some extent.

In order to obtain better restraint of the excess brightness phenomenon in terms of a human visual sense, it is preferable to determine a ratio, at which the frame is divided, in accordance with brightness rather than luminance.

Further, as in the case of luminance, the difference between the actual brightness and the expected brightness is largest at a value that is the half of the maximum value of the expected brightness.

For this reason, the difference (i.e., the excess brightness) recognized by a human can be more improved by dividing the frame so that an image whose brightness is not more than the half of the maximum value is displayed in the single sub-frame than by dividing the frame so that an image whose luminance is the half of the maximum value is displayed in the single sub-frame.

Therefore, a preferable value of a divisional point of the frame is explained as follows.

Firstly, for ease of calculation, the aforementioned equations (5) and (6) are approximated so as to obtain the following equation (6a), which is similar to the equation (1) in terms of a form of a mathematical expression.

$$M = Y \char`^ (1/\alpha) \cdots (6a)$$

In the case of converting the equations (5) and (6) into the equation (6a), $\alpha$ in the equation (6a) has a value of approximately 2.5.

If the value of $\alpha$ falls within a range from 2.2 to 3.0, it is considered that a relation between the luminance Y and the psychometric lightness M is appropriate in the equation (6a) (i.e., the relation matches with a human visual sense).

It is found that: in order to display an image whose psychometric lightness M is the half of the maximum value in the single sub-frame, it is preferable to set two sub-frame periods at approximately 1 : 3 when $\gamma$ is 2.2 and approximately 1 : 7 when $\gamma$ is 3.0.

Note that, in the case of dividing the frame in this way, a sub-frame used to display an image when the luminance is low (a sub-frame in which the maximum luminance is kept when the luminance is high) is a shorter period.

The following description explains the case where the ratio of (i) the period corresponding to the former sub-frame and (ii) the period corresponding to the latter sub-frame is 3 : 1.

Firstly explained is the display luminance in this case.

In this case, when carrying out a low luminance display by outputting and displaying, in a single frame, an image whose luminance is not more than 1/4 (threshold luminance; Tmax/4) of the maximum luminance, the control section 15 sets a luminance in the former sub-frame to be the minimum luminance (black) and adjusts only the display luminance of the latter sub-frame so as to carry out the gradation expression (the gradation expression is carried out by using only the latter sub-frame).

On this occasion, the integrated luminance in the frame is represented by the following equation: "(the minimum luminance + the luminance in the latter sub-frame) / 4."

Further, when outputting an image whose luminance is higher than the threshold luminance (Tmax/4) in a single frame (when the luminance is high), the control section 15 sets the luminance in the latter sub-frame to be the maximum luminance (white) and adjusts the display luminance in the former sub-frame so as to carry out the gradation expression.

In this case, the integrated luminance in the frame is represented by the following equation: "(the luminance in the former sub-frame + the maximum luminance) / 4."

Next, the following description specifically explains a signal gradation setting carried out with respect to the display signals (the former stage display signal and the latter stage display signal) for acquirement of the aforementioned display luminance.

Note that, also in this case, the signal gradation (and the below-mentioned outputting operation) is determined so as to satisfy the aforementioned conditions (a) and (b).

Firstly, the control section 15 calculates, in advance, the frame gradation that corresponds to the threshold luminance (Tmax/4) by using the equation (1).

Namely, the frame gradation (threshold luminance gradation; Lt) that corresponds to such display luminance is found in accordance with the equation (1) as follows.

$$Lt = (1/4) \wedge (1/\gamma) \times Lmax \cdots (7)$$

Further, in displaying an image, the control section 15 determines a frame gradation L in accordance with the image signal sent from the frame memory 11.

When the frame gradation L is equal to or smaller than the frame gradation Lt, the control section 15 sets the luminance gradation F of the former display signal to be the minimum value (0) by using the former stage LUT 12.

On the other hand, the control section 15 sets, in accordance with the equation (1), the luminance gradation R of the latter stage display signal by using the latter stage LUT 13 so that the luminance gradation R satisfies the following equation (8).

$$R = (1/4) \wedge (1/\gamma) \times L \cdots (8)$$

When the frame gradation L is larger than Lt, the control section 15 sets the luminance gradation R of the latter display signal to be the maximum value (255).

On the other hand, the control section 15 sets the luminance gradation F of the former sub-frame in accordance with the equation (1) so that the luminance gradation F satisfies the following equation (9).

$$F = (L \wedge \gamma - (1/4) \times Lmax \wedge \gamma) \wedge (1/\gamma) \cdots (9)$$

The following description explains the operation for outputting the former stage display signal and the latter stage display signal.

As described above, in the arrangement equally dividing the frame, the time (1/2 frame period) in which the former stage display signals are written in the pixels is equal to the time (1/2 frame period) in which the latter stage display signals are written in the pixels.

A reason for this is as follows. That is, after finishing writing all the former stage display signals at a doubled clock, the latter stage display signals are written, so that a period in which the gate lines corresponding to the former stage display signals are ON is equal to a period in which the gate lines corresponding to the latter stage display signals are ON.

Therefore, the divisional ratio can be changed by changing a timing at which the writing of the latter stage display signals starts (a timing at which the gate lines corresponding to the latter stage display signals are turned ON).

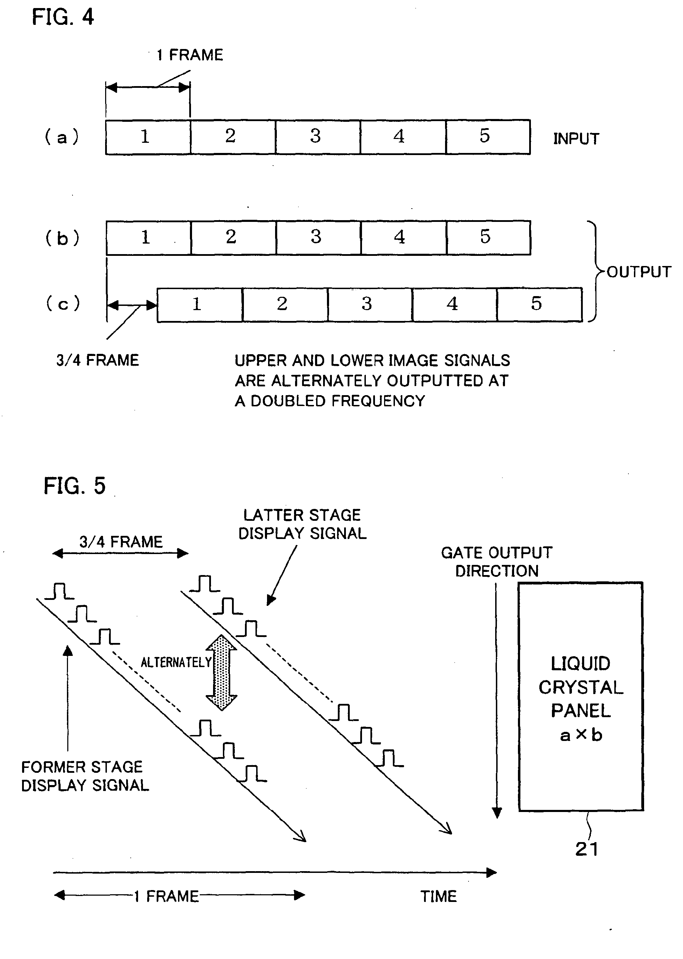

Fig. 4(a) illustrates the image signal sent to the frame memory 11. Fig. 4(b) is an explanatory diagram illustrating each of the image signals sent from the frame memory 11 to the former stage LUT 12 in the case where the divisional ratio is 3 : 1. Fig. 4(c) is an explanatory diagram illustrating each of the image signals sent from the frame memory 11 to the latter stage LUT 13 in this case.

Fig. 5 is an explanatory diagram illustrating (i) the timing at which the gate lines corresponding to the former display signals are turned ON and (ii) the timing at which the gate lines corresponding to the latter display signals are turned ON in the case where the divisional ratio is 3 : 1.

As illustrated in these figures, in this case, the control section 15 writes the former stage display signals, corresponding to a first frame, in the gate lines at a normal clock.

After 3/4 frame period later, the writing of the latter display signals starts. Thereafter, the display signals and the latter display signals are alternately written at a doubled clock.

In other words, after finishing writing the former display signals in the pixels corresponding to a "number of all the gate lines × 3/4"-th gate line, the control section 15 accumulates, in the source driver 23, the latter display signals that correspond to pixels in a first gate line, and then turns ON the first gate line. Next, the control section 15 accumulates, in the source driver 23, the former display signals that correspond to pixels in a gate line indicated by "number of all the gate lines × 3/4" + 1, and then turns ON the gate line.

By alternately outputting the former display signals and the latter display signals at a doubled clock in this way after the 3/4 frame period of the first frame, the divisional ratio of the former sub-frame and the latter sub-frame can be 3 : 1.

And, a total (total obtained by integration) of the display luminance of the sub-frames in the two sub-frames is the integrated luminance of the frame.

Note that the data accumulated in the frame memory 11 is sent to the source driver 23 in synchronization with the gate timing.

Fig. 7 is a graph illustrating a relationship between the expected brightness and the actual brightness in the case of dividing the frame at the ratio of 3 : 1.

As illustrated in Fig. 7, with this arrangement, the frame is divided at a point where the difference between the expected brightness and the actual brightness is largest. Therefore, the difference between the expected brightness and the actual brightness at a viewing angle of 60° is much smaller than the difference illustrated in Fig. 6.

Therefore, when the luminance (brightness) is so low as to be not more than "Tmax/4", the present display device carries out the black display in the former sub-frame and uses only the latter sub-frame so that the integrated luminance of the frame is not varied, thereby displaying an image.

Accordingly, the difference (between the actual brightness and the expected brightness) in the former sub-frame is minimized, so that the total difference in the former sub-frame and in the latter sub-frame is reduced approximately by half as illustrated by a broken line in Fig. 7.

On the other hand, when the luminance (brightness) is high, the present display device sets the luminance of the latter sub-frame to be the white display and adjusts only the luminance of the former sub-frame so that the integrated luminance of the frame is not varied, thereby displaying an image.

Accordingly, also in this case, the difference in the latter sub-frame is minimized, so that the total difference in the former sub-frame and in the latter sub-frame is reduced approximately by half as illustrated by the broken line in Fig. 7.

In this way, the present display device reduces the total difference in the brightness approximately by half as compared with the arrangement that carries out the normal hold display.

This allows more effective restraint of such a phenomenon (excess brightness phenomenon; see Fig. 2) that an image in halftone luminance becomes bright and pale.

Here, in the aforementioned arrangement, the former stage display signals of the first frame are written in pixels of the gate lines at normal clock during a period of time from the start of the display to the 3/4 frame period. This is because, during the period, a timing for the writing of the latter stage display signal has not come.

However, instead of such a way of displaying an image, doubled-clock display may be carried out from the start of the display, by using a dummy latter stage display signal. Specifically, during the period of time from the start of the displaying to the 3/4 frame period, the former stage display signals and the latter display signals (dummy latter stage display signals) whose signal gradation is 0 are alternately outputted.

Here, the following description explains a more general case where the divisional ratio of the former sub-frame and the latter sub-frame is n : 1.

In this case, when outputting an image whose luminance (threshold luminance; Tmax/(n + 1)) is not more than the half of the maximum luminance in a single frame (when the luminance is low), the control section 15 sets the luminance in the former sub-frame to be the minimum luminance (black) and adjusts only the display luminance in the latter sub-frame so as to carry out the gradation expression (the control section 15 carries out the gradation expression by using only the latter sub-frame).

In this case, the integrated luminance in the frame is represented by the following equation: "(the minimum luminance + the luminance in the latter sub-frame)/(n + 1)."

On the other hand, when outputting an image whose luminance is higher than the threshold luminance (when the luminance is high), the control section 15 sets the luminance in the latter sub-frame to be the maximum luminance (white) and adjusts the display luminance in the former sub-frame so as to carry out the gradation expression.

In this case, the integrated luminance in the frame is represented by the following equation: "(the luminance in the latter sub-frame + the minimum luminance) / (n + 1)."

Next, the following description specifically explains a signal gradation setting carried out with respect to the display signals (the former stage display signal and the latter stage display signal) for acquirement of such display luminance.

Note that, also in this case, the signal gradation setting

(and an outputting operation) is so set as to satisfy the aforementioned conditions (a) and (b).

Firstly, the control section 15 calculates, in advance, a frame gradation that corresponds to the threshold luminance (Tmax/(n + 1)) by using the aforementioned equation (1).

Specifically, the frame gradation (threshold luminance gradation; Lt) that corresponds to such display luminance is found in accordance with the equation (1) as follows.

$$Lt = (1 \ / \ (n + 1)) \ \wedge \ (1 \ / \ \gamma) \times Lmax \cdots (10)$$

Further, in displaying an image, the control section 15 determines a frame gradation L in accordance with the image signal sent from the frame memory 11.

When the frame gradation L is equal to or smaller than the frame gradation Lt, the control section 15 sets the luminance gradation F of the former display signal to be the minimum value (0) by using the former stage LUT 12.

On the other hand, the control section 15 sets, in accordance with the equation (1), the luminance gradation R of the latter stage display signal by using the latter stage LUT 13 so that the luminance gradation R satisfies the following equation (11).

$$R = (1 / (n + 1)) \wedge (1 / \gamma) \times L \cdots (11)$$

When the frame gradation L is larger than the frame gradation Lt, the control section 15 sets the luminance gradation R of the latter display signal to be the maximum value (255).
On the other hand, the control section 15 sets the luminance gradation F of the former sub-frame in accordance with the equation (1) so that the luminance gradation F satisfies the following equation (12).

$$F = (L \wedge \gamma - (1 / (n + 1)) \times Lmax \wedge \gamma) \wedge (1/\gamma) \cdots (12)$$

In the case of dividing the frame at the divisional ratio of 3 : 1, the present display device may be designed so as to carry out the operation for outputting the display signals in the following manner. That is, the former stage display signals and the latter stage display signals are alternately outputted at the doubled clock after a period corresponding to n/(n + 1) of a first frame.
Further, it is possible to describe the arrangement equally dividing the frame as follows. That is, the frame is divided into "1 + n (n = 1)" number of sub-frames, and the former display signals are outputted at a clock "1 + n (n = 1)" times as high as a normal clock during a period corresponding to a single sub-frame, and then the latter display signals are continuously outputted during a period corresponding to the other n-number (n = 1) of sub-frame.
However, in this arrangement, when n is 2 or more, a very fast clock is required. This increases a device cost.
Therefore, when n is 2 or more, it is preferable to arrange the present display device so that the former display signals and the latter display signals are alternately outputted.
In this case, because the ratio of the former sub-frame and the latter sub-frame can be n : 1 by adjusting an outputting timing of the latter stage display signal, a required clock frequency is maintained at a frequency twice as high as the normal clock frequency.
Further, in the present embodiment, the control section 15 converts the image signals into the display signals by using the former stage LUT 12 and the latter stage LUT 13.
Here, it is possible to provide a plurality of the former stage LUTs 12 and the latter stage LUTs 13 in the present display device.

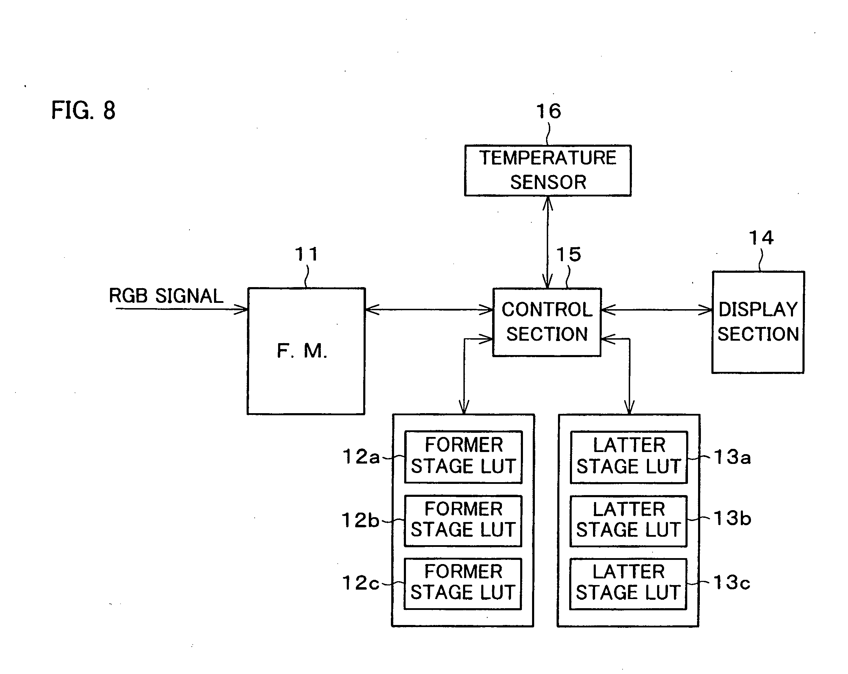

Fig. 8 illustrates an arrangement in which three former stage LUTs 12a to 12c and three latter stage LUTs 13a to 13c are provided instead of the former stage LUT12 and the latter stage LUT 13 in the arrangement illustrated in Fig. 1, and a temperature sensor 16 is further provided.
That is, the response property and the gradation luminance property of the liquid crystal panel 21 change according to the environmental temperature (temperature (air temperature) of the environment surrounding the display section 14). On this account, an optimal display signal corresponding to the image signal also changes according to the environmental temperature.
Note that, the former stage LUTs 12a to 12c are the former stage LUTs suitably used in temperature ranges different from each other. Moreover, the latter stage LUTs 13a to 13c are the latter stage LUTs suitably used in temperature ranges different from each other.
Moreover, the temperature sensor 16 measures the environmental temperature around the present display device, and informs measurement results to the control section 15.
In this arrangement, the control section 15 is designed so as to determine which LUT to use according to information about the environmental temperature informed by the temperature sensor 16. Therefore, this arrangement makes it possible to send a more appropriate display signal, generated from the image signal, to the liquid crystal panel 21. Therefore, the image display can be carried out with appropriate luminance in any temperature ranges assumable (for example, from 0°C to 65°C).
Moreover, it is preferable that the liquid crystal panel 21 be driven by an alternating current. This is because, by driving the liquid crystal panel 21 by the alternating current, it is possible to change the electric charge polarity (direction of the voltage (inter-electrode voltage) between the pixel electrodes sandwiching the liquid crystal) of the pixel per frame.
In case of a direct current drive, a biased voltage is applied between the electrodes, so that the electrodes are electrically charged. In cases where this state is continued, a state in which the electric potential difference is generated between the electrodes (a state called "burning") occurs even when a voltage is not applied.

Here, in case of carrying out the sub-frame display like the present display device does, in many cases, values (absolute values) of a voltage applied between the pixel electrodes are different from each other between the sub-frames.

Therefore, in case of changing the polarity of the inter-electrode voltage at a sub-frame cycle, the voltage difference between the former sub-frame and the latter sub-frame causes an applied inter-electrode voltage to be biased. On this account, in case of driving the liquid crystal panel 21 for a long time, the electrodes are electrically charged, so that there is a possibility that the burning, flicker, or the like drawback occurs.

Therefore, in case of the present display device, it is preferable that the polarity of the inter-electrode voltage be changed at a frame cycle.

Note that, there are two methods for changing the polarity of the inter-electrode voltage at the frame cycle. One method is to apply a single-polar voltage in a single frame.

Another method is that polarities of the inter-electrode voltage in two sub-frames of a single frame are made opposite to each other, and further the polarities of the inter-electrode voltage are equalized with each other in a latter sub-frame of a frame and in a former sub-frame of its following frame.

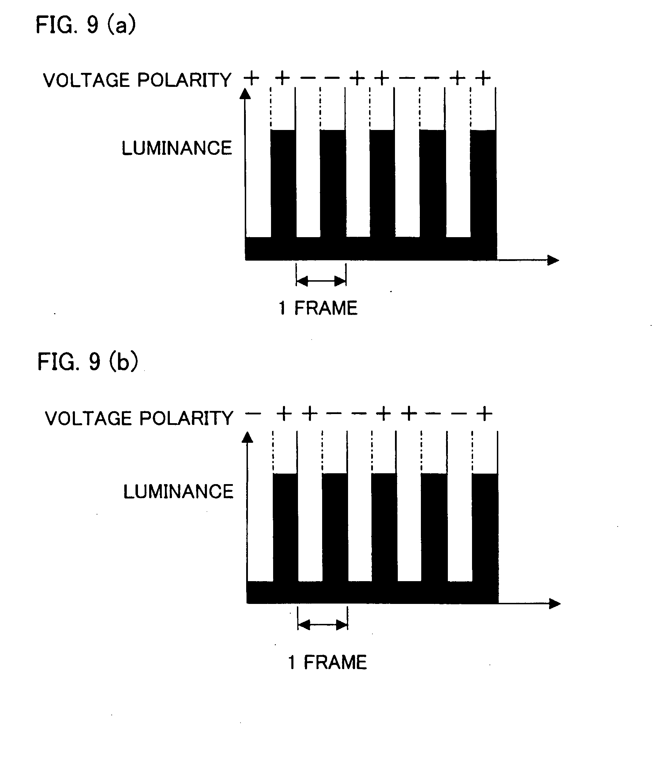

Fig. 9(a) illustrates a relationship between a polarity of a voltage (polarity of the inter-electrode voltage) and the frame cycle in case of using the former method. Moreover, Fig. 9(b) illustrates a relationship between the polarity of the voltage and the frame cycle in case of using the latter method.

Even in case where the inter-electrode voltages are largely different from each other between the sub-frames, it is possible to prevent the burning and the flicker by alternating the inter-electrode voltage at the frame cycle.

Moreover, as described above, the present display device drives the liquid crystal panel 21 by the sub-frame display whereby the excess brightness is suppressed.

However, in case where the response speed (speed until the voltage (inter-electrode voltage) applied to the liquid crystal becomes the same as the applied voltage) of the liquid crystal is low, effects obtained by the sub-frame display are sometimes reduced.

That is, in case of carrying out the normal hold display, a single liquid crystal state corresponds to a single luminance gradation in a TFT liquid crystal panel. Therefore, the response property of the liquid crystal does not depend on the luminance gradation of the display signal.

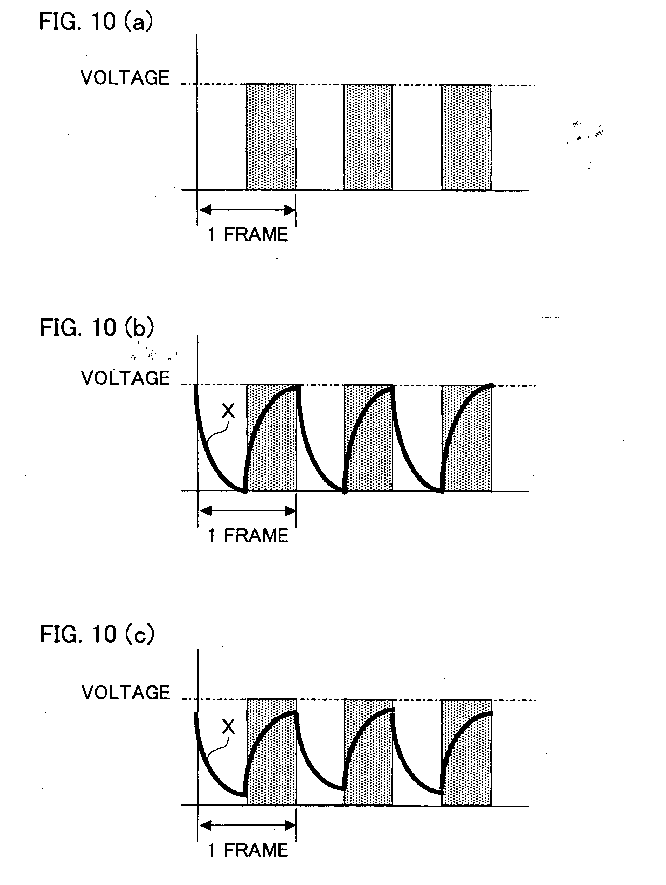

Meanwhile, in case of carrying out the sub-frame display like the present display device does, when displaying an image based on a halftone display signal which results in the minimum luminance (white) of the former sub-frame and the maximum luminance of the latter frame, the voltage applied to the liquid crystal in a single frame fluctuates as illustrated in Fig. 10(a).

Moreover, as illustrated by a continuous line X in Fig. 10(b), the inter-electrode voltage changes according to the response speed (response property) of the liquid crystal.

Here, in case where the response speed of the liquid crystal is low, when carrying out such a halftone display, the inter-electrode voltage (continuous line X) changes as illustrated in Fig. 10(c).

Therefore, in this case, the display luminance of the former sub-frame does not become minimum, and the display luminance of the latter sub-frame does not become maximum.

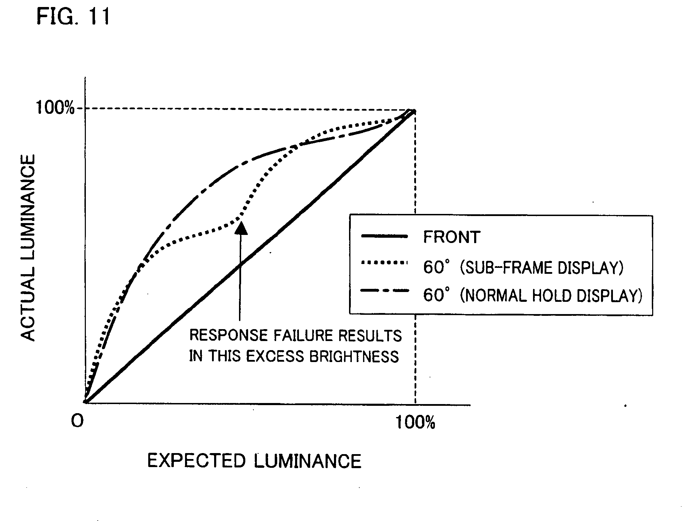

On this account, a relationship between the expected luminance and the actual luminance is as illustrated in Fig. 11. That is, even in case of carrying out the sub-frame display, it becomes impossible to carry out a display with a luminance (minimum luminance/maximum luminance) which causes the expected luminance and the actual luminance to be less differentiated (deviated) from each other when the viewing angle is large.

On this account, an effect of suppressing the excess brightness phenomenon is reduced.

Therefore, in order to satisfactorily carry out the sub-frame display like the present display device does, it is preferable to design the liquid crystal panel 21 so that the response speed of the liquid crystal in the liquid crystal panel 21 satisfy the following conditions (c) and (d).

When a voltage signal (generated by the source driver 23 according to the display signal) is given to the liquid crystal, displaying an image having the minimum luminance (black; corresponding to the minimum brightness), in order to change the image having the minimum luminance into the image having the maximum luminance (white; corresponding to the maximum brightness), the voltage of the liquid crystal (inter-electrode voltage) reaches a value not less than 90% of the voltage of the voltage signal (the actual brightness reaches 90% of the maximum brightness when viewed perpendicularly with respect to the front surface) in a period corresponding to a shorter sub-frame.

When a voltage signal is given to the liquid crystal displaying an image having the maximum luminance (white) in order to change the image having the maximum luminance into the image having the minimum luminance (black), the voltage of the liquid crystal (inter-electrode voltage) reaches a value not more than 5% of the voltage of the voltage signal (the actual brightness reaches 5% of the minimum brightness when viewed perpendicularly with respect to the front surface) in a period corresponding to the shorter sub-frame.

Moreover, it is preferable that the control section 15 be designed so as to be able to monitor the response speed of the liquid crystal.

In case where the control section judges that the response speed of the liquid crystal is low due to the environmental temperature or the like and the above conditions (c) and (d) can not be satisfied, the control section 15 may be set so as to stop the sub-frame display and drive the liquid crystal panel 21 on the basis of the normal hold display.

With this arrangement, even in case where the excess brightness phenomenon becomes rather conspicuous due to the sub-frame display, it is possible to change the display mode of the liquid crystal panel from the sub-frame display to the normal hold display.

In the present embodiment, the present display device functions as a liquid crystal monitor. However, the present display device can function also as a liquid crystal television receiver (liquid crystal television).

Such a liquid crystal television can be realized by providing a tuner section on the present display device. The tuner section selects a channel of a television broadcasting signal, and conveys a television image signal of thus selected channel to the control section 15 via the frame memory 11.

In this arrangement, the control section 15 generates a display signal in accordance with the television image signal.

Note that, in the present embodiment, black is expressed in the former sub-frame and the gradation is expressed by using only the latter sub-frame in case of a low luminance.

However, even when the former and latter sub-frames are replaced with each other (even when black is expressed in the latter sub-frame and the gradation is expressed by using only the former sub-frame in case of a low luminance), it is possible to obtain the same display state.

Further, in the present embodiment, the equation (1) is used to set luminance gradations (signal gradations) of display signals (a former stage display signal and a latter stage display signal).

However, an actual panel has a luminance even in case of a black display (gradation 0), and a response speed of liquid crystal is limited, so that it is preferable to take these factors into consideration in setting a signal gradation. That is, it is preferable that: the liquid crystal panel 21 is made to display an actual image, and a relationship between a signal gradation and a display luminance is measured, so as to determine the LUT (output table) corresponding to the equation (1) in accordance with the measurement result.

Moreover, in the present embodiment, $\alpha$ indicated in the equation (6a) ranges from 2.2 to 3. This range is not strictly calculated, but is regarded as being substantially appropriate for a human visual sense.

Further, when a source driver for normal hold display is used as the source driver 23 of the present display device, a voltage signal is outputted to each pixel (liquid crystal) according to an inputted signal gradation (luminance gradation of a display signal) so as to obtain a display luminance calculated by using the equation (1) where $\gamma = 2.2$.

Further, even in case of carrying out the sub-frame display, in each sub-frame, the source driver 23 outputs a voltage signal, used in the normal hold display, without any modification, according to an inputted signal gradation.

However, when a voltage signal is outputted in this manner, it is sometimes impossible to equalize a total luminance in a single frame in the sub-frame display with a value in the normal hold display (it is sometimes impossible to sufficiently carry out the gradation expression).

Therefore, it is preferable to design the source driver 23 so as to output a voltage signal, obtained by carrying out conversion into a divided luminance, in the sub-frame display.

That is, it is preferable to design the source driver 23 so as to finely adjust a voltage (inter-electrode voltage), applied to liquid crystal, according to a signal gradation.

Thus, it is preferable to design the source driver 23 as a source driver for the sub-frame display so that it is possible to carry out the foregoing fine adjustment.

Moreover, in the present embodiment, the liquid crystal panel 21 is a VA panel. However, the arrangement is not limited to this. Even when a liquid crystal panel in a mode other than the VA mode is used, the sub-frame display of the present display device can suppress the excess brightness.

That is, the sub-frame display of the present display device can suppress the excess brightness which occurs in a liquid crystal panel (liquid crystal panel in such a mode that a viewing angle property in a gradation gamma varies) in which an expected luminance (expected brightness) and an actual luminance (actual brightness) are largely different from each other when a viewing angle is wider.

Further, particularly, the sub-frame display of the present display device is effective for a liquid crystal panel having such a property that its display luminance is higher as a viewing angle is wider.

Moreover, the liquid crystal panel 21 of the present display device may be NB (Normally Black) or NW (Normally White).

Further, in the present embodiment, it is preferable to divide a frame at a ratio ranging from 1 : 3 to 1 : 7. However, the arrangement is not limited to this. The present display device may be designed so as to divide a frame at 1 : n (n is a natural number not less than 1).

Further, in the present embodiment, the aforementioned equation (10) is used to set signal gradations of display signals (a former stage display signal and a latter stage display signal).

However, this setting is under such condition that a response speed of liquid crystal is 0 ms and T0 (minimum luminance) = 0. Thus, it is preferable to devise further ideas in practical use.

That is, a maximum luminance (threshold luminance) which can be obtained in a sub-frame (latter sub-frame) is Tmax/(n+1) in case where a response speed of liquid crystal is 0 ms and T0 = 0. Further, a threshold luminance gradation Lt is a frame gradation of this luminance.

$$Lt = ((Tmax/(n+1)-T0)/(Tmax-T0)) \wedge (1/\gamma)$$

$$(\gamma = 2.2, T0 = 0)$$

In case where the response speed of liquid crystal is not 0, under such condition that a response of "black → white" is Y% in a sub-frame and a response of "white → black" is Z% in a sub-frame and T0 = 0, a threshold luminance (luminance of Lt) Tt is represented as follows.

$$Tt = ((Tmax-T0) \times Y/100 + (Tmax-T0) \times Z/100)/2$$

Thus, the following equation holds.

$$Lt = ((Tt-T0)/(Tmax-T0)) \wedge (1/\gamma)$$

$$(\gamma = 2.2)$$

Further, actual Lt may be more complicated and the threshold luminance Tt sometimes cannot be represented by a simple equation. Therefore, it is sometimes difficult to express Lt by Lmax.
In order to calculate Lt in this case, it is preferable to use a result obtained by measuring a luminance of the liquid crystal panel. That is, in case where a maximum luminance is obtained in one sub-frame and a minimum luminance is obtained in the other sub-frame, a luminance obtained in emission from the liquid crystal panel is measured. Thus obtained luminance is Tt. Further, a gradation Lt upon leakage is determined in accordance with the following equation.

$$Lt = ((Tt-T0)/(Tmax-T0)) \wedge (1/\gamma)$$

$$(\gamma = 2.2)$$

In this manner, Lt calculated in accordance with the equation (10) is an ideal value, so that it is preferable to use this value merely as a barometer.
Here, the following description explains, more in detail, why it is preferable in the present display device to change a polarity of the inter-electrode voltage at a frame cycle.

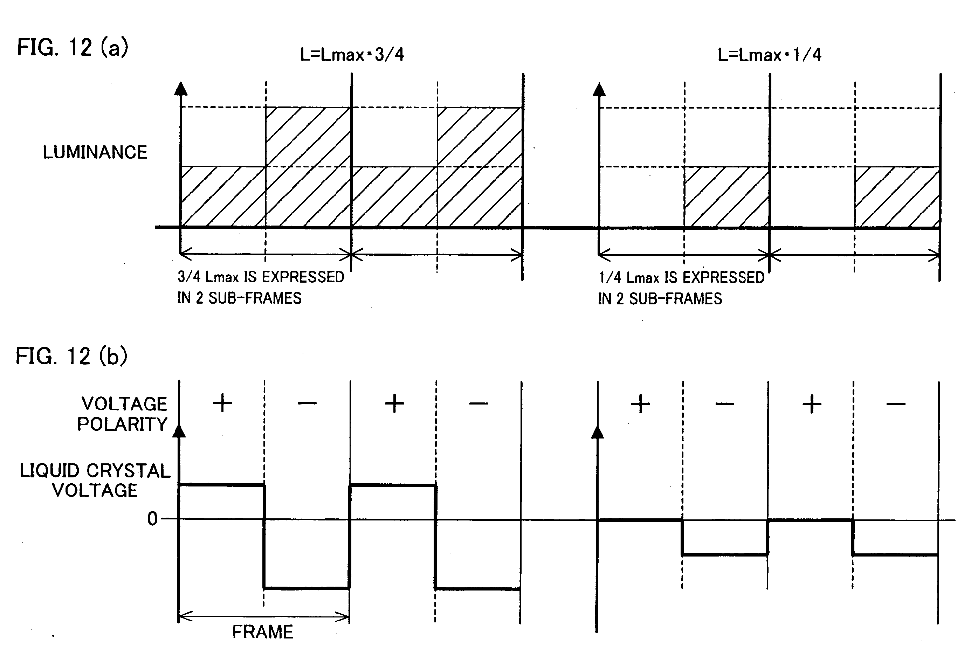

Fig. 12(a) is a graph illustrating a luminance of an image displayed by using the former sub-frame and the latter sub-frame in the case where the display luminance is 3/4 of Lmax and in the case where the display luminance is 1/4 of Lmax.
As shown in Fig. 12(a), in the case of carrying out the sub-frame display like the present display device, a value (value of a voltage to be applied to a region between the pixel electrodes; absolute value) of a voltage to be applied to a liquid crystal in the former sub-frame is different from that in the latter sub-frame.
Therefore, when the polarity of each voltage (liquid crystal voltage) to be applied to the liquid crystal is changed at a sub-frame cycle, the liquid crystal voltages to be applied are uneven due to the difference between the voltage value in the former sub-frame and the voltage value in the latter sub-frame as illustrated in Fig. 12(b). In other words, a total of the liquid crystal voltage to be applied is not 0V. Thus, it is impossible to cancel any direct current component of the liquid crystal voltage. For this reason, when the liquid crystal liquid crystal panel 21 is driven for a long time, electric charges are accumulated in the electrodes, which may result in drawbacks such as burning, flicker, and the like.
Therefore, it is preferable that the polarity of the liquid crystal voltage be changed at the frame cycle.
Note that, there are two methods for varying the polarity of the liquid crystal voltage at the frame cycle. One of the methods is to apply a voltage whose polarity is maintained during a single frame period.

The other method is to apply a liquid crystal voltage whose polarity is reversed between the sub-frames of the single frame and is maintained between the latter sub-frame and a former sub-frame of another frame which occurs after that frame.

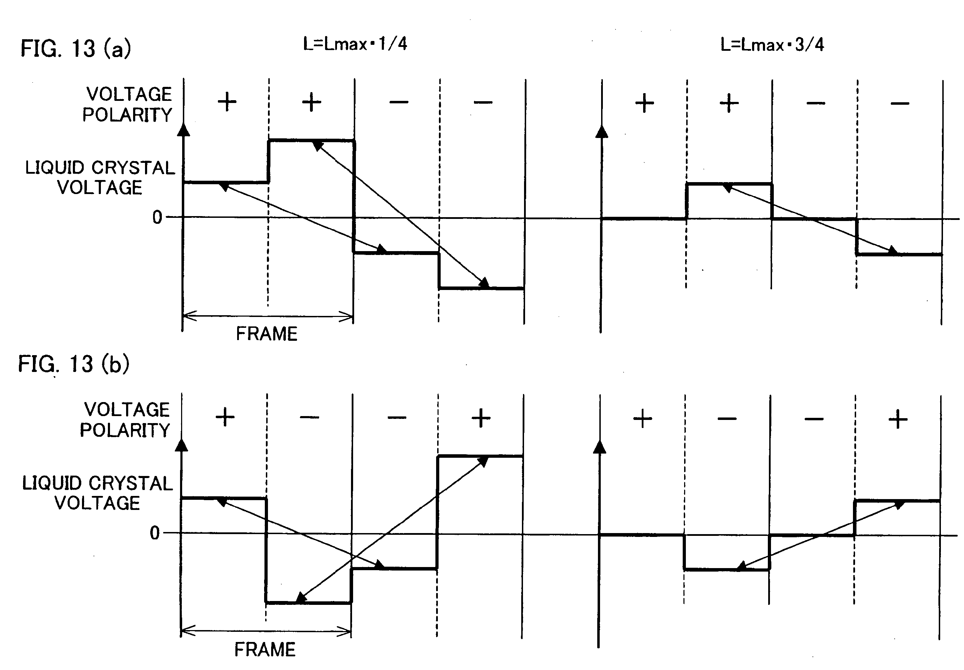

Fig. 13(a) is a graph illustrating a relationship between the voltage polarity (polarity of the liquid crystal voltage) and the frame cycle and a relation between the voltage polarity and the liquid crystal voltage in case of adopting the former method. Meanwhile, Fig. 13(b) is a graph illustrating the relationship in case of adopting the latter method.

As illustrated in the graphs, in the case of changing the polarity of each liquid crystal voltage at the frame cycle, a total voltage of the former sub-frames of the frames adjacent to each other can be made into 0V and a total voltage of the latter sub-frames of the frames adjacent to each other can be made into 0V. In other words, a total voltage in the two frames is 0V. Thus, it is possible to cancel the direct current component of the applied voltage.

Accordingly, even when the liquid crystal voltage is greatly varied between the sub-frames, the burning and the flicker can be prevented by alternating the liquid crystal voltage at the frame cycle as described above.

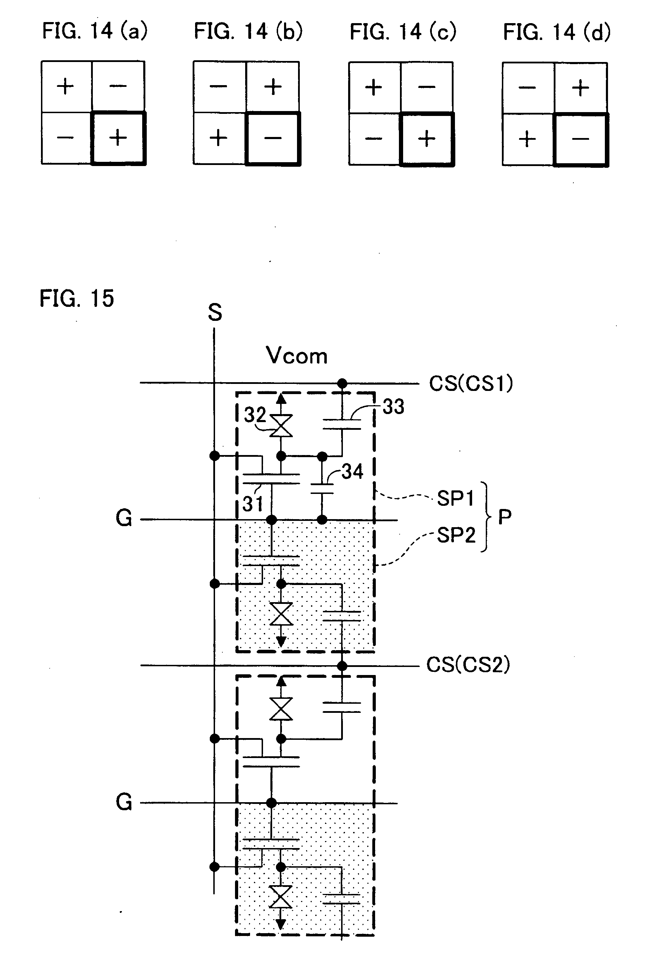

Each of Fig. 14(a) through Fig. 14(d) is a diagram illustrating four pixels of the liquid crystal panel 21 and polarities of liquid crystal voltages applied to the pixels.

As described above, it is preferable that a polarity of a voltage applied to a pixel be reversed at the frame cycle. In this case, polarities of the liquid crystal voltages applied to the pixels change, in an order from Fig. 14(a) to Fig. 14(d), at the frame cycle.

Here, it is preferable that a total of the liquid crystal voltages applied to all the pixels in the liquid crystal panel 21 be 0V. A control for obtaining such a total can be realized by applying voltages in such a manner that a polarity of a voltage applied to a pixel is different from a polarity of another voltage applied to another pixel adjacent to that pixel.

Further, the present display device may be so designed as to carry out pixel-division driving (area-ratio gradation driving).

The following description explains the pixel-division driving of the present display device. Fig. 15 is a diagram illustrating a structure of the liquid crystal panel 21 carrying out the pixel-division driving.

Displaying in accordance with the pixel-division driving is carried out by respectively applying different voltages to sub-pixels SP 1 and SP2 obtained by dividing a pixel P connected to a gate line G and a source line S of the liquid crystal panel 21 as illustrated in Fig. 15.

Note that, such a pixel-division driving is described in, for example, Documents 4 through 7.

The pixel-division driving is briefly explained as follows.

As illustrated in Fig. 15, in the present display device that carries out the pixel-division driving, the pixel P is sandwiched between two different auxiliary capacitor lines CS1 and CS2. The auxiliary capacitor lines CS1 and CS2 are connected to the sub-pixels SP1 and SP2, respectively.

Further, each of the sub-pixels SP1 and SP2 is provided with a TFT 31, a liquid crystal capacitor 32, and an auxiliary capacitor 33.

The TFT 31 is connected to the gate line G, the source line S, and the liquid crystal capacitor 32. The auxiliary capacitor 33 is connected to the TFT 31, the liquid crystal capacitor 32, and the auxiliary capacitor lines CS1 or CS2.

Auxiliary signals that are alternating voltage signals each having a predetermined frequency are applied to the auxiliary capacitor lines CS1 and CS2. The auxiliary signals applied to the auxiliary capacitor lines CS1 and CS2 have phases opposite to each other (phases different at 180°).

The liquid crystal capacitor 32 is connected to the TFT 31, a common voltage Vcom, and the auxiliary capacitor 33. Further, the liquid crystal capacitor 32 is connected to a parasitic capacitor 34 generated between the liquid crystal capacitor 32 and the gate line G.

In this arrangement, when the gate line G is brought into an ON state, the TFTs 31 of the sub-pixels SP1 and SP2 in the pixel P are in a conductive state.

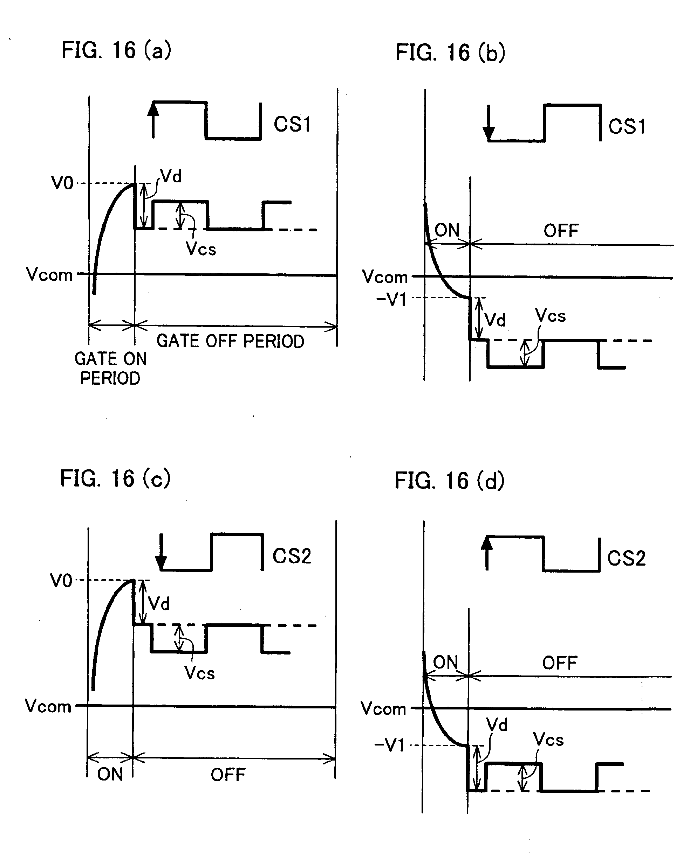

Fig. 16(a) and Fig. 16(c) are graphs illustrating voltages (liquid crystal voltages) applied to the liquid crystal capacitors 32 of the sub-pixels SP 1 and SP2 in case where a display signal indicative of positive ($\geq$ Vcom) is applied to the source line S.

In this case, as illustrated in Fig. 16(a) and Fig. 16(c), each voltage value in the liquid crystal capacitor 32 increases to a value (V0) that corresponds to the display signal.

When the gate line G becomes OFF, a gate drawing phenomenon due to the parasitic capacitor 34 causes the liquid crystal voltage to decrease by Vd.

On this occasion, when the auxiliary signal of the auxiliary capacitor line CS1 rises (from low to high) as illustrated in Fig. 16(a), the liquid crystal voltage of the sub-pixel SP1 connected to the auxiliary capacitor line CS1 increases by Vcs, which is a value corresponding to an amplitude of the auxiliary signal flowing in the auxiliary capacitor lines CS1. Moreover, the liquid crystal voltage of the sub-pixel SP 1 oscillates within a range from V0 to V0 - Vd, at the amplitude Vcs, in accordance with the frequency of the auxiliary signal flowing in the auxiliary capacitor lines CS1.

Meanwhile, in this case, the auxiliary signal in the auxiliary capacitor line CS2 falls (from high to low) as illustrated in Fig. 16(c). This causes the liquid crystal voltage in the sub-pixel SP2 connected to the auxiliary capacitor line CS2 to decrease by Vcs corresponding to the amplitude of the auxiliary signal. Thereafter, the liquid crystal voltage in the sub-pixel SP2 oscillates within a range from V0 - Vd to V0 - Vd - Vcs.

Fig. 16(b) and Fig. 16(d) are graphs illustrating voltages (liquid crystal voltages) respectively applied to the liquid crystal capacitors 32 of the sub-pixels SP 1 and SP2 in case where a display signal indicative of negative ($\leq$ Vcom) is applied to the source line S when the gate line G is in the ON state.

In this case, as illustrated in Fig. 16(b) and Fig. 16(d), a liquid crystal voltage of each of the sub-pixels SP1 and SP2 decreases to a value (-V1) that corresponds to the display signal.

Thereafter, when the gate line G becomes OFF, the gate drawing phenomenon causes the liquid crystal voltage to further decrease by Vd.

On this occasion, when the auxiliary signal in the auxiliary capacitor line CS1 falls as illustrated in Fig. 16(b), the liquid crystal voltage in the sub-pixel SP1 connected to the auxiliary capacitor line CS2 further decreases by Vcs. Moreover, the liquid crystal voltage in the sub-pixel SP1 oscillates within a range from -V0 - Vd Vcs to -V0 - Vd.

Meanwhile, in this case, the auxiliary signal in the auxiliary capacitor line CS2 rises as illustrated in Fig. 16(c). This causes the liquid crystal voltage in the sub-pixel SP2 connected to the auxiliary capacitor line CS2 to increase by Vcs. Thereafter, the liquid crystal voltage in the sub-pixel SP2 oscillates within a range from V0 - Vd to V0 - Vd - Vcs.

In this way, it is possible to differentiate the liquid crystal voltages of the sub-pixels SP1 and SP2 from each other by applying the auxiliary signals whose phases are different at 180°.

That is, when the display signal in the source line S indicates positive, in the sub-pixel receiving the auxiliary signal that rises just after the occurrence of the drawing phenomenon, an absolute value of the liquid crystal voltage becomes higher than the display signal voltage (see Fig. 16(a)).

Meanwhile, in the sub-pixel receiving the auxiliary signal that falls on this occasion, an absolute value of the liquid crystal voltage becomes lower than the voltage value of the display signal (see Fig. 16(c)).

Further, when the display signal in the source line S indicates negative, in the sub-pixel receiving the auxiliary signal that falls just after occurrence of the drawing phenomenon, an absolute value of the liquid crystal voltage becomes higher than the voltage value of the display signal (see Fig. 16(b)).

Meanwhile, in the sub-pixel receiving the auxiliary signal that rises on this occasion, an absolute value of the liquid crystal voltage becomes lower than the voltage value of the display signal (see Fig. 16(d)).

Therefore, in the example illustrated in Fig. 16(a) through Fig. 16(d), the liquid crystal voltage (absolute value) in the sub-pixel SP1 is higher than that in the sub-pixel SP2 (the sub-pixel SP1 has a higher display luminance than that of the sub-pixel SP2).

Further, it is possible to control the difference (Vcs) between the liquid crystal voltages of the sub-pixels SP1 and SP2 in accordance with the amplitude values of the auxiliary signals applied to the auxiliary capacitor lines CS1 and CS2. This makes it possible to make a desirable difference between the display luminance of the sub-pixel SP1 and that of the sub-pixel SP2 (a first luminance and a second luminance).

Table 1 illustrates (i) the polarity of the liquid crystal voltage applied to the sub-pixel (bright pixel) in which the luminance is high and the polarity of the liquid crystal voltage applied to the sub-pixel (dark pixel) in which the luminance is low; and (ii) a state of the auxiliary signal just after the occurrence of the drawing phenomenon. Note that, in Table 1, the polarities of the liquid crystal voltages are indicated by symbols "+" and "-". Also in Table 1, a symbol "↑" indicates the rise of the auxiliary signal just after the drawing phenomenon, and a symbol "↓" indicates the fall of the auxiliary signal.

[Table 1]

| Bright pixel | +, ↑ | -, ↓ |
|---|---|---|
| Dark pixel | +, ↓ | -, ↑ |

Note that luminance in the pixel P is a total value of luminance values (equal to transmissivity of the liquid crystal) of the sub-pixels SP1 and SP2.

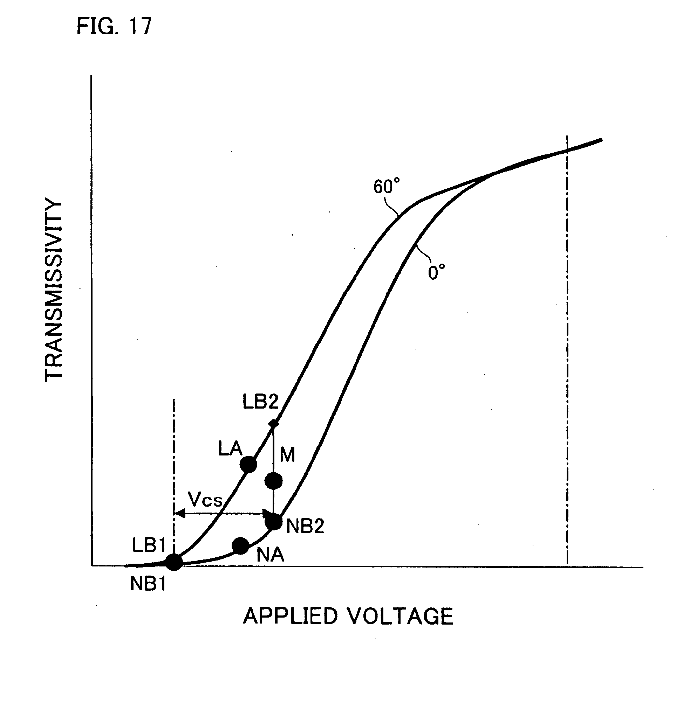

Fig. 17 is a graph illustrating a relationship between the transmissivity of the liquid crystal panel 21 and the applied voltage at a viewing angle of 0° (front) and at a viewing angle of 60° in the case where the pixel-division driving is not carried out.

As illustrated in the graph, when the transmissivity in the front surface is NA (when the liquid crystal voltage is so control that the transmissivity becomes NA), the transmissivity at a viewing angle of 60° is LA.

Here, in the pixel-division driving, the transmissivity of NA in the front surface is obtained as follows. That is, voltages that are different by Vcs are applied to the sub-pixels SP1 and SP2 respectively so that the sub-pixels SP1 and SP2 have transmissivities NB1 and NB2 satisfying the following equation: NA = (NB1 + NB2)/2, respectively.

When the transmissivity of the sub-pixel SP1 is NB1 at a viewing angle of 0°, the transmissivity of the sub-pixel SP1 is LB 1 at a viewing angle of 60°. Also, the transmissivity of the sub-pixel SP2 is NB2 at a viewing angle of 0°, the transmissivity of the sub-pixel SP2 is LB2 at a viewing angle of 60°. The transmissivity LB1 is almost 0, so that the transmissivity in the single pixel is M (LB2/2) that is smaller than LA.

In this way, the viewing angle property can be improved by carrying out the pixel-division driving.

Further, for example, in case where the pixel-division driving is carried out, when an amplitude of the CS signal is increased, it is also possible to display an image having a low luminance (high luminance) by carrying out the black display (white display) in one sub-pixel and adjusting a luminance of the other sub-pixel. As in the sub-frame display, it is possible to minimize the difference between the display luminance and the actual luminance in the one sub-pixel. On this account, the viewing angle property can be further improved.

Further, the foregoing arrangement may be varied so that the black display (white display) is not carried out in one sub-pixel. That is, when both the sub-pixels are different from each other in terms of the luminance, it is possible to improve the viewing angle in principle. Thus, it is possible to reduce the CS amplitude, it is easier to design the panel driving.

Further, as to all the display signals, it is not necessary to differentiate the sub-pixels SP1 and SP2 in terms of the luminance. For example, when carrying out the white display or the black display, it is preferable to equalize these luminances. Thus, the display device is designed so that: with respect to at least one display signal (display signal voltage), a luminance of the sub-pixel SP1 is set to be the first luminance and a luminance of the sub-pixel SP2 is set to be the second luminance different from the first luminance.

Further, in the pixel-division driving, it is preferable that the polarity of the display signal applied to the source line S be changed per frame. In other words, in case where the sub-pixels SP1 and SP2 are driven as illustrated in Fig. 16(a) and Fig. 16(c) in a certain frame, it is preferable to drive the sub-pixels SP1 and SP2 as illustrated in Fig. 16(b) and Fig. 16(d) in a subsequent frame.

On this account, the two liquid crystal capacitors 32 in the pixel P have a total voltage of 0V in the two frames. Thus, it is possible to cancel the direct current component of the applied voltage.

Note that, in the aforementioned pixel-division driving, a single pixel is divided into two, however, the division is not limited to this. A single pixel may be divided into three or more.

Note also that, the pixel-division driving may be carried out in combination with the normal hold display or the sub-frame display. Moreover, the pixel-division driving may be carried out in combination with the polarity-reverse driving described with reference to Fig. 12(a), Fig. 12(b), Fig. 13(a), and Fig. 13(b).

The following description explains the combination of the pixel-division driving, the sub-frame display, and the polarity-reverse driving.

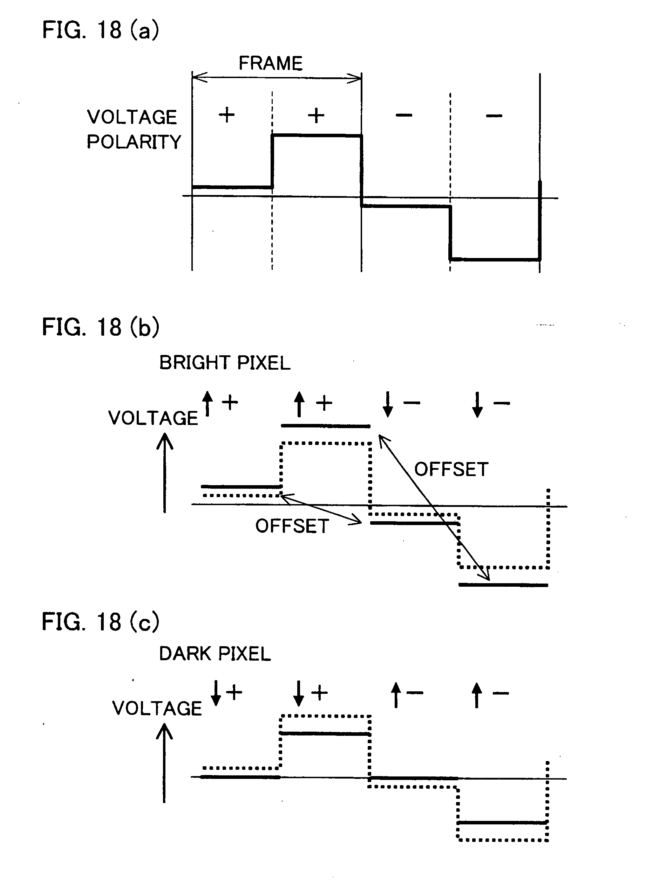

Fig. 18(a) is a graph illustrating how a liquid crystal voltage (corresponding to a single pixel) varies in case where the sub-frame display is carried out while reversing a polarity of the liquid crystal voltage in every frame as in the case illustrated in Fig. 13(a).

In case where the sub-frame display is carried out with the combination of the polarity-reverse driving and the pixel-division driving, the liquid crystal voltage in each sub-pixel changes as illustrated in Fig. 18(b) and Fig. 18(c).

That is, Fig. 18(b) is a graph illustrating the liquid crystal voltage in the sub-pixel (bright pixel) having a high luminance in the pixel-division driving. Fig. 18(c) is a graph illustrating the liquid crystal voltage in the sub-pixel (dark pixel) having a low luminance in the pixel-division driving.

Note that each of broken lines in Fig. 18(b) and Fig. 18(c) indicates the liquid crystal voltage in the case of carrying out no pixel-division driving. Note also that, each of continuous lines therein indicates the liquid crystal voltage in the case of carrying out the pixel-division driving.

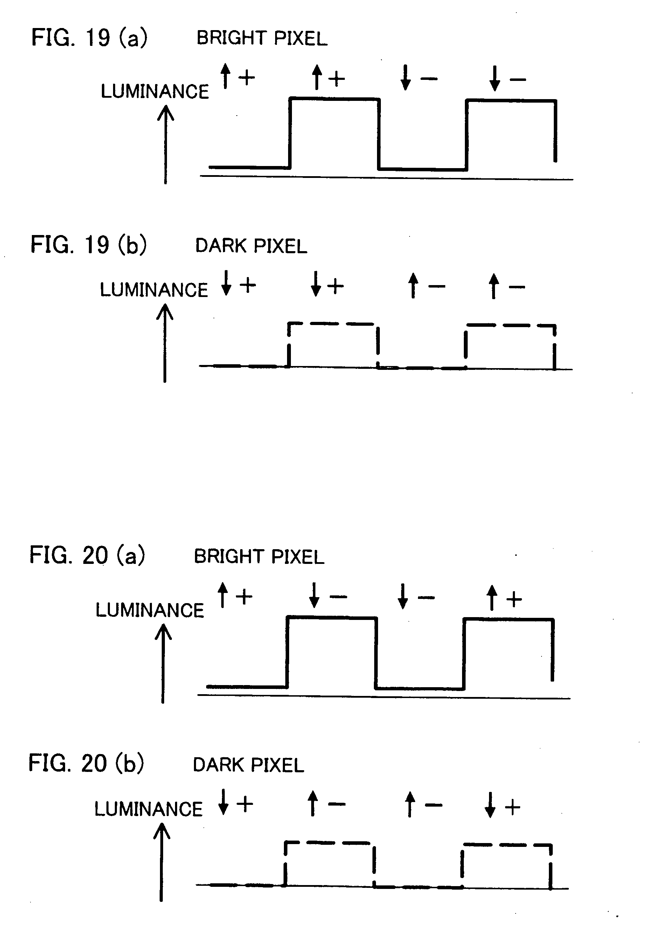

Fig. 19(a) and Fig. 19(b) are graphs, corresponding to the Fig. 18(b) and Fig. 18(c), each of which illustrates a luminance of the bright pixel and a luminance of the dark pixel.

Note that, each of symbols "↑" and "↓" in the figures indicates a state of the auxiliary signal just after occurrence of the drawing phenomenon (whether the auxiliary signal rises or falls just after occurrence of the drawing phenomenon).

As illustrated in the figures, in this case, a polarity of the liquid crystal voltage is reversed in every frame. This operation is carried out in order to appropriately offset the liquid crystal voltages different from each other between sub-frames (in order that a total of the liquid crystal voltages in the two frames is 0V).

Each state (phase just after the drawing phenomenon; ↑ and ↓) of the auxiliary signal is reversed at the same phase as the polarity reverse.

When the driving is carried out in this way, the liquid crystal voltage (absolute value) and the luminance in both the sub-frames become high in the bright pixel, and the liquid crystal voltage and the luminance in both the sub-frames become low in the dark pixel, as illustrated in Fig. 18(b), Fig. 18(c), Fig. 19(a), and Fig. 19(b).

Moreover, in the former sub-frame, an increment of the liquid crystal voltage in the bright pixel is equal to a decrement of the liquid crystal voltage in the dark pixel. Similarly, in the latter sub-frame, an increment of the liquid crystal voltage in the bright pixel is equal to a decrement of the liquid crystal voltage in the dark pixel.

This prevents the unevenness in polarities of the liquid crystal voltages applied to the pixel. On this account, the total of the liquid crystal voltages can be made into 0V in two frames. (Note that, an increment (decrement) of the liquid crystal voltage in the former sub-frame due to the pixel-division driving is different from an increment (decrement) of the liquid crystal voltage in the latter sub-frame due to the pixel-division driving. This is because the capacitance varies according to the transmissivity of the liquid crystal.)

Here, in the aforementioned description, the polarity of the liquid crystal voltage applied to the sub-pixel is reversed in every frame. However, the present invention is not limited to this, and the polarity of the liquid crystal voltage may be reversed at a frame cycle.

Therefore, as illustrated in Fig. 13(b), each of the liquid crystal voltages may have a reverse polarity between the sub-frames of the single frame, and may have the same polarity between the latter sub-frame and a former sub-frame of a frame occurring subsequent to the frame.

Fig. 20(a) and Fig. 20(b) are graphs which respectively illustrate the luminance in the bright pixel and the luminance in the dark pixel in case of carrying out such polarity reverse.

Also in this case, each state ($\uparrow$ and $\downarrow$) of the auxiliary signal is reversed at the same phase as the polarity reverse. Thus, a total of the liquid crystal voltages can be made into 0V.

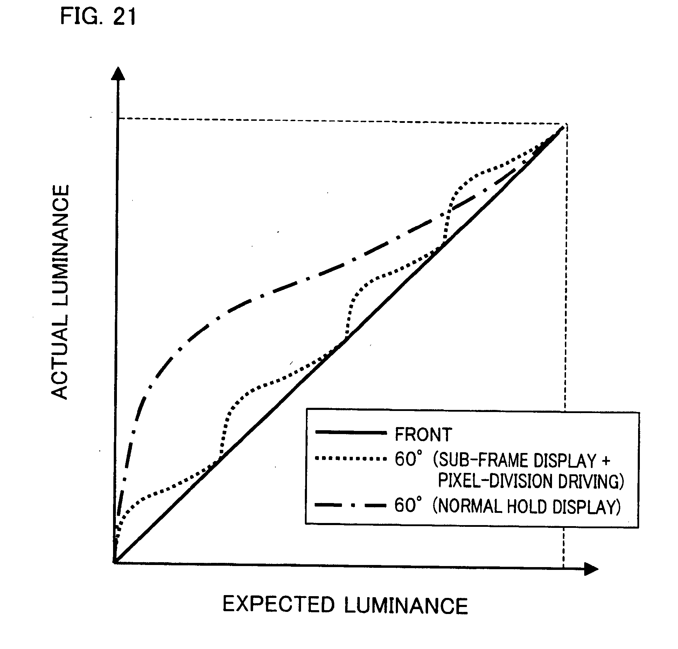

Fig. 21 is a graph illustrating (i) a result (indicated by a broken line and a continuous line) of display carried out in combination with the sub-frame display, the polarity-reverse driving, and the pixel-division driving and (ii) a result (indicated by a chain line and a continuous line in the same manner as in Fig. 2) of the normal hold display.

As illustrated in the graph, by carrying out the sub-frame display and the pixel-division driving in combination, the actual luminance can be very close to the expected luminance at a viewing angle of 60°. That is, the viewing angle property can be greatly improved by the synergy effect of the sub-frame display and the pixel-division driving.

Note that, in the aforementioned description, each state (phase just after the drawing phenomenon; $\uparrow$ and $\downarrow$) of the auxiliary signal is reversed at the same phase as the polarity reverse. When the state of the auxiliary signal is changed in every sub-frame irrespective of the polarity reverse, the liquid crystal voltages cannot be offset appropriately.

That is, a variation amount of the liquid crystal voltage corresponding to a state of the auxiliary signal changes according to intensity (absolute value) of the original liquid crystal voltage (in case where the liquid crystal voltage is high, also the variation amount becomes large). Further, as described above, an increment (decrement) of the liquid crystal voltage due to the pixel-division driving varies between the former sub-frame and the latter sub-frame (in examples of Fig. 18(b) and Fig. 18(c), the variation amount of the latter sub-frame is larger than that of the former sub-frame).

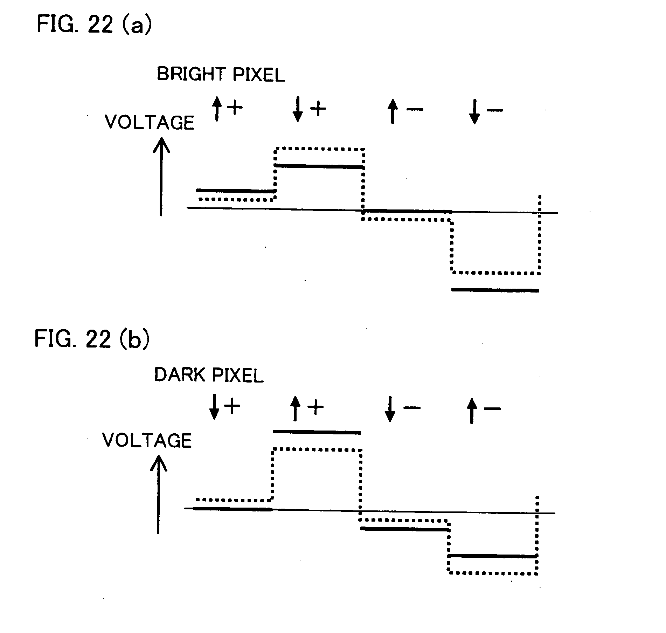

Thus, in case of applying the liquid crystal voltage as illustrated in Fig. 18(a), when the state (phase) of the auxiliary signal is reversed in each sub-frame, as illustrated in Fig. 22(a), the liquid crystal voltage of the latter sub-frame drastically drops in the bright pixel. Meanwhile, the liquid crystal voltage of the former sub-frame increases a little.

Further, as illustrated in Fig. 22(b), the liquid crystal voltage of the latter sub-frame greatly increases in the dark pixel, and the liquid crystal voltage of the former sub-frame decreases a little.

Therefore, a total liquid crystal voltage in whole the two frames cannot be made into 0V (negative in the bright pixel and positive in the dark pixel), and it is possible to cancel the direct current component of the liquid crystal voltage. Thus, it is impossible to sufficiently prevent the burning, the flicker, or the like.

Further, in the present embodiment, it is preferable to set the ratio (frame divisional ratio) of the former sub-frame period and the latter sub-frame period so as to range from 3 : 1 to 7 : 1. However, the present invention is not limited to this. The frame divisional ratio may be set to be 1 : 1 or 2 : 1.

As a comparative example, in case of setting the frame divisional ratio to be 1 : 1, the actual luminance can be made closer to the expected luminance as compared with the normal hold display as illustrated in Fig. 3. Further, also as to the brightness, the actual brightness can be made closer to the expected brightness as compared with the normal hold display as illustrated in Fig. 6.

Thus, also in this case, it is obvious that the viewing angle property can be improved as compared with the normal hold display.

Further, in the liquid crystal panel 21, it takes a time, corresponding to the response speed of the liquid crystal, for the liquid crystal voltage (voltage applied to the liquid crystal: inter-electrode voltage) to reach a value corresponding to the display signal. Thus, when one sub-frame period is too short, it may be impossible to raise the voltage of liquid crystal to be a value corresponding to the display signal within the period.

Therefore, by setting the ratio of the former sub-frame period and the latter sub-frame period to be 1 : 1 or 2 : 1, it is possible to prevent one sub-frame period from being too short. Thus, even when liquid crystal whose response speed is low is used, it is possible to appropriately carry out the display.

Further, the frame divisional ratio (ratio of the former sub-frame and the latter sub-frame) may be set to be n : 1 (n is a natural number not less than 7).

Further, the divisional ratio may be set to be n : 1 (n is a real number not less than 1 (more preferably, n is a real number more than 1)). For example, by setting the divisional ratio to be 1.5 : 1, it is possible to improve the viewing angle property as compared with the comparative example where the divisional ratio is set to be 1 : 1. Further, it is easy to use the liquid crystal material whose response speed is low as compared with the case where the divisional ratio is set to be 2 : 1.

Further, even in case of setting the frame divisional ratio to be n : 1 (n is a real number not less than 1), when displaying an image having such a low luminance (low brightness) that "1(Tmax/(n+1)) / (n+1) of the maximum luminance", it is preferable to carry out the display by using only the latter sub-frame.

Further, when displaying an image having a high luminance (high brightness) equal to or more than "Tmax/(n+1)", it is preferable to display the image by carrying out the white display in the latter sub-frame and adjusting only a luminance of the former sub-frame.

On this account, only a single sub-frame can be free from any difference between the actual luminance and the expected luminance. Thus, it is possible to improve the viewing angle property of the present display device.

Here, in case of dividing a frame at n : 1, it is possible to obtain substantially the same effect when the former frame is n and when the latter frame is n. That is, the ratio of n : 1 and the ratio of 1 : n are identical with each other in terms of the improvement of the viewing angle.

Further, also in case where n is an actual number not less than 1, it is effective to control the luminance gradation by using the aforementioned equations (1) to (12).

Further, in the present embodiment, the present display device is arranged so as to carry out the sub-frame display by dividing a single frame into two sub-frames. However, the present invention is not limited to this. A non-claimed display device may be designed so as to carry out the sub-frame display by dividing a single frame into three or more sub-frames.

As to the sub-frame display carried out by dividing a single frame into m number of sub-frames, when the luminance is extremely low, the image is displayed by carrying out the black display in m-1 number of sub-frames and adjusting only a luminance (luminance gradation) of a single sub-frame. Further, when the luminance is too high to express only in this sub-frame, the white display is carried out in this sub-frame. Further, the image is displayed by carrying out the black display in m-2 number of sub-frames and adjusting a luminance of a left sub-frame.

That is, also in case of dividing a single frame into m number of sub-frames, as in the case of dividing a single frame into two sub-frames, it is preferable to adjust (vary) a luminance of only one sub-frame and to keep the white display or the black display in other sub-frames. Thus, m-1 number of sub-frames can be free from any difference between the actual luminance and the expected luminance. Therefore, it is possible to improve the viewing angle property of the present display device.

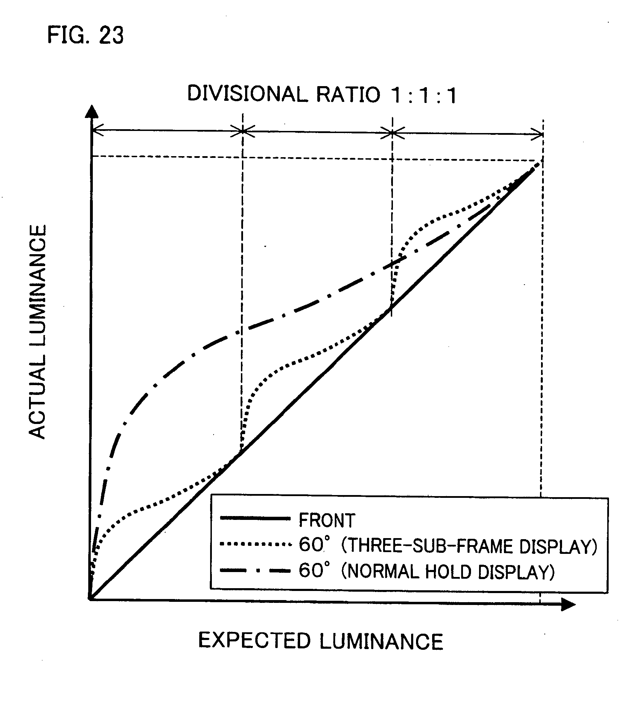

Fig. 23 is a graph illustrating a non-claimed result (indicated by a broken line and a continuous line) of display carried out by evenly dividing a single frame into three sub-frames and a result (indicated by a chain line and a continuous line in the same as in Fig. 2) of the normal hold display.

As illustrated in this graph, when the number of sub-frames is increased to three, the actual luminance can be made closer to the expected luminance. This shows that it is possible to further improve the viewing angle property of the present display device.

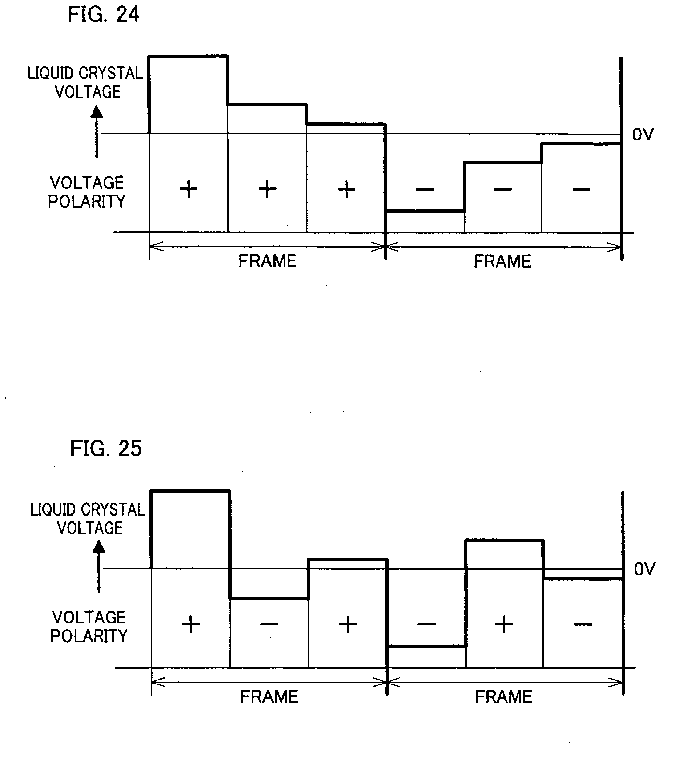

Further, also in case of dividing a single frame into m number of sub-frames, it is preferable to carry out the aforementioned polarity-reverse driving. Fig. 24 is a graph illustrating transition of a liquid crystal voltage in case where a frame is divided into three and a voltage polarity is reversed in each frame.

As illustrated in Fig. 24, also in this case, a total liquid crystal voltage in two frames can be made into 0V.

Further, Fig. 25 is a graph illustrating transition of the liquid crystal voltage in the non-claimed case where a frame is divided into three and a voltage polarity is reversed in each sub-frame.

In this way, when a frame is divided into an odd number of sub-frames, a total liquid crystal voltage in two frames can be made into 0V even in case where the voltage polarity is reversed in each sub-frame.

Thus, in case where a frame is divided into m number of sub-frames (m is an integer not less than 2), it is preferable to apply a liquid crystal voltage whose polarities are different from each other in an M-th sub-frame of one frame (M ranges from 1 to m) and in an M-th sub-frame of another frame adjacent to that frame (M ranges from 1 to m). Thus, a total liquid crystal voltage in two frames can be made into 0V.

In case where a frame is divided into m number of sub-frames (m is an integer not less than 2), it is preferable to reverse the polarity of the liquid crystal voltage so that a total liquid crystal voltage in two frames (or more frames) is made into 0V.

Further, in the foregoing description, when dividing a single frame into m number of sub-frames, a luminance of only a single sub-frame is adjusted, and the white display (maximum luminance) or the black display (minimum luminance) is carried out in other sub-frames.

However, the present invention is not limited to this. It may be so arranged that luminances of two or more sub-frames are adjusted. Also in this case, by carrying out the white display (maximum luminance) or the black display (minimum luminance) in at least one sub-frame, it is possible to improve the viewing angle property.

Further, a luminance of a sub-frame whose luminance is not adjusted may be set to be "a maximum value or a value larger than a second predetermined value instead of setting the luminance to be the maximum luminance. Further, the luminance may be set to be "a minimum value or a value smaller than a first predetermined value" instead of setting the luminance to be the minimum luminance.

Also in this case, it is possible to sufficiently reduce the difference (brightness difference) between the actual brightness and the expected brightness in the sub-frame whose luminance is not adjusted. Thus, it is possible to improve the viewing angle property of the present display device.

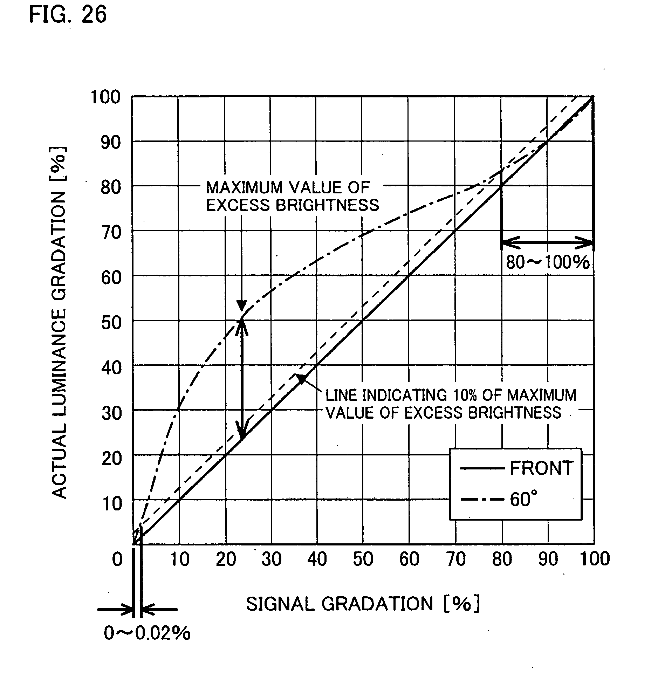

Here, Fig. 26 is a graph for illustrating a relationship (viewing angle gradation property actual measurement) between a signal gradation (%: luminance gradation of a display signal) outputted to the display section 14 and an actual luminance gradation (%) according to each signal gradation in a sub-frame where the luminance is not adjusted.

Note that, the actual luminance gradation is obtained "by converting a luminance (actual luminance), outputted from the liquid crystal panel 21 of the display section 14 according to each signal gradation, into a luminance gradation on the basis of the foregoing equation (1)".

As illustrated in this graph, the foregoing two gradations are equal to each other in front (viewing angle = 0°). Meanwhile, when the viewing angle is 60°, the excess brightness causes the actual luminance gradation to be brighter in the halftone than the signal gradation.

Further, the excess brightness reaches a maximum value regardless of the viewing angle when the luminance gradation is in a range from 20% to 30%. Here, it is found that: in a case where the excess brightness does not exceed "10% of the maximum value" indicated by a broken line of the graph, it is possible to sufficiently keep the display quality of the present display device (it is possible to sufficiently reduce the aforementioned brightness difference). Further, as to the signal gradation, its range which prevents the excess brightness from exceeding "10% of the maximum value" is 80 to 100% of the maximum value of the signal gradation and is 0 to 0.02% of the maximum value.

Further, each of these ranges does not vary even when the viewing angle varies. Thus, it is preferable to set the second predetermined value to 80% of the maximum luminance, and it preferable to set the first predetermined value to 0.02% of the maximum luminance.

Further, it may be so arranged that there is not provided the sub-frame whose luminance is not adjusted. That is, it may be so arranged that: in case of carrying out the display in m number of sub-frames, display states of the sub-frames are not differentiated from each other. Even in such an arrangement, it is preferable to carry out the polarity-reverse driving in which a polarity of the liquid crystal voltage is reversed at a frame cycle.

Note that, in case of carrying out the display in m number of sub-frames, a little difference between the sub-frames in terms of the display condition enables the viewing angle property of the liquid crystal panel 21 to be improved.

Further, in the foregoing description, all the processes in the present display device are controlled by the control section 15. However, the arrangement is not limited to this, and it may be so arranged that: a program for carrying out the processes is stored in a storage medium, and an information processing device which can read out the program is used instead of the control section 15.

In this arrangement, a computing device (CPU or MPU) of the information processing device reads out the program stored in the storage medium so as to carry out the processes. Thus, it can be said that the program itself realizes the processes.

Here, as the foregoing information processing device, it is possible to use not only a general computer (a workstation or a personal computer) but also a function extension board or a function extension unit provided on a computer.

Moreover, the program is a program code (an execute form program, intermediate code program, or source program) of software for implementing the aforementioned processes. This program may be used by itself or may be used in combination with other programs (OS or the like). Further, it may be so arranged that: the program is temporarily stored in a memory (RAM or the like) of the device after being read out from a storage medium, and is then read out again so as to implement the program.

Further, the storage medium storing the program may be a storage medium which is provided separable from the information processing device for implementing the program, or may be a medium which is fixedly provided on the information processing device. Alternatively, the storage medium may be connected to the information processing device as an external storage device.

Examples of the storage medium include tapes, such as magnetic tape and cassette tape; disks including magnetic disks, such as floppy disks (registered trademark) and hard disk, and optical disks, such as CD-ROMs, MOs, MDs, DVDs, and CD-Rs; cards, such as IC card (including memory cards) and optical cards; and semiconductor memories, such as mask ROMs, EPROMs, EEPROMs, and flash ROMs.

Further, it is possible to use a storage medium which is connected to the information processing device via a network (intranet/internet or the like). In this case, the information processing device obtains a program by downloading the program via the network. That is, it may be so arranged that: the program is obtained via a transmission medium (medium for fluidly holding the program) such as the network (connected to a fixed line or a radio line). Note that, it is preferable that a program for downloading is stored in the information processing device (or a sending side device or a receiving side device) in advance.

The invention being thus described, it will be obvious that the same way may be varied in many ways. Such variations are not to be regarded as a departure from the scope of the invention, and all such modifications as would be obvious to one skilled in the art are intended to be included within the scope of the following claims.

**Claims**

1. A liquid crystal display device, wherein a single frame is divided into first and second sub-frames so as to display an image, said display device comprising:

   a display section (14) for displaying an image whose luminance is based on a luminance gradation of a display signal; and
   a control section (15) for generating a first display signal in the first sub-frame and a second display signal in the second sub-frame so that division of the frame does not vary a total luminance outputted from the display section in a single frame, and for outputting the first and second display signals to the display section, wherein the control section (15) is adapted to adjust a luminance gradation of the first display signal and set a luminance gradation of the second display signal to a minimum value or a value smaller than a first predetermined value to display an image whose brightness is relatively low, and
   the control section (15) is adapted to set the luminance gradation of the first display signal to a maximum value or a value larger than a second predetermined value and adjust the luminance gradation of the second display signal to display an image whose brightness is relatively high, **characterised in that**
   the control section (15) is adapted to divide the frame such that the period corresponding to the second sub-frame is longer than the period corresponding to the first sub-frame, and such that a ratio of a period corresponding to the first sub-frame and a period corresponding to the second sub-frame is 1 : n, wherein n is a real number more than 1, such that the difference between the expected brightness and the actual brightness at a viewing angle is suppressed.

2. The liquid crystal display device as set forth in claim 1, wherein n is in a range not more than 7.

3. The liquid crystal display device as set forth in claim 1, wherein the second predetermined value is 80% of the maximum gradation.

4. The liquid crystal display device as set forth in claim 1, wherein:

   n is an integer, and
   the control section (15) calculates Lt represented by

   $$Lt = (1/(n+1))\,\hat{}\,(1/\gamma) \times Lmax$$

   in accordance with (i) a maximum luminance Lmax of an image displayed in a single frame and (ii) a predetermined value $\gamma$, and
   the control section (15) determines whether or not a frame gradation L indicative of a luminance gradation of a display signal in a normal hold display is not more than Lt, and
   the control section (15) sets a luminance gradation F of the second display signal to be minimum (0) and sets a luminance gradation R of the first display signal so that

   $$R = (1/(n+1))\,\hat{}\,(1/\gamma) \times L$$

   when the frame gradation L is not more than Lt, and
   the control section (15) sets the luminance gradation R of the first display signal to be maximum and sets the luminance gradation F of the second display signal so that

   $$F = ((L\,\hat{}\,\gamma - (1/(n+1)) \times Lmax\,\hat{}\,\gamma))\,\hat{}\,(1/\gamma)$$

   when the frame gradation L is more than Lt.

5. The liquid crystal display device as set forth in claim 1, wherein the control section (15) is designed so as to alternately output the first display signal and the second display signal to the display section with a difference of 1/(n+1) cycle.

6. The liquid crystal display device as set forth in claim 1, wherein the display section (15) is adapted to cause a liquid crystal panel (21) to display an image.

7. The liquid crystal display device as set forth in claim 6, wherein the liquid crystal panel (21) is in a VA mode.

8. The liquid crystal display device as set forth in claim 6, wherein the liquid crystal panel (21) is normally black.

9. The liquid crystal display device as set forth in claim 6, wherein
the control section is designed to determine whether a liquid crystal response speed of the liquid crystal panel (21) satisfies conditions (c) and (d) or not, and the control section (15) is adapted to carry out normal hold display when the conditions (c) and (d) are not satisfied,
said conditions (c) and (d) being as follows:

(c) when a voltage signal maximizing a brightness is provided to a liquid crystal displaying an image whose brightness is minimum, a voltage of the liquid crystal reaches a value not less than 90% of a voltage of the voltage signal within the period corresponding to the first sub-frame, and
(d) when a voltage signal minimizing a brightness is provided to a liquid crystal displaying an image whose brightness is maximum, a voltage of the liquid crystal reaches a value not more than 5% of a voltage of the voltage signal within the period corresponding to the first sub-frame.

10. The liquid crystal display device as set forth in claim 6, wherein the control section (15) is designed to equalize polarities of a voltage, applied to liquid crystal, with each other in the first and second sub-frames and
wherein the control section is designed to differentiate the polarities of the voltage from each other between frames adjacent to each other.

11. The liquid crystal display device as set forth in claim 6, wherein
the control section (15) is designed to differentiate polarities of a voltage, applied to liquid crystal, from each other between two sub-frames in a single frame, and wherein the control section is designed to equalize the polarities of the voltage with each other in a first sub-frame of a single frame and a second sub-frame of other frame adjacent to the first sub-frame.

12. The liquid crystal display device as set forth in claim 1, wherein:

the control section (15) is set so as to generate the display signal by using (i) an image signal inputted from an outside and (ii) each of relation tables indicative of a relationship between the image signal and the display signal, and
the relation tables are provided in plurality so as to cover temperature ranges different from each other, and
the control section (15) is designed so as to select a relation table corresponding to an environmental temperature and use the relation table thus selected.

13. The liquid crystal display device as set forth in claim 6, wherein the control section (15) is designed so as to vary a polarity of a voltage applied to liquid crystal at a frame cycle.

14. The liquid crystal display device as set forth in claim 1, wherein
the control section (15) is designed to set luminance gradations of the sub-pixels so that a total value of luminances outputted from both the sub-pixels is a luminance corresponding to the display signal.

15. The liquid crystal display device as set forth in claim 1, wherein
the sub-pixels are connected to auxiliary lines different from each other, and wherein each of the sub-pixels includes:

a pixel capacitor;
a switching element for applying a display signal, which has been applied to the source line, to the pixel capacitor when the gate line turns ON; and
an auxiliary capacitor connected to the pixel capacitor and each of the auxiliary lines, and wherein
the control section (15) is adapted to differentiate auxiliary signals, flowing in the auxiliary lines connected to the sub-pixels, from each other so as to differentiate voltages, each of which is applied to the pixel capacitor of the sub-pixel, from each other.

**16.** The liquid crystal display device as set forth in claim 1, wherein
the display section (14) is adapted to cause a liquid crystal panel (21) to display an image, and
the control section (15) is adapted to vary a polarity of a voltage applied to liquid crystal of the sub-pixel at a frame cycle.

**17.** The liquid crystal display device as set forth in claim 16, wherein
the control section (15) is designed to reverse a phase of each of the auxiliary signals at the frame cycle.

**18.** A liquid crystal display device according to claim 1, wherein
the first and second display signals are output to the display section (4) at a doubled clock.

**19.** The liquid crystal display device as set forth in claim 18, wherein n is a natural number ranging from 3 to 7.

**20.** A liquid crystal monitor, comprising:

the display device, as set forth in any one of claims 1 and 18, whose display section is a liquid crystal panel (21); and
a signal input section for conveying an image signal to the control section (15), wherein the control section of the display device is designed to generate the display signal in accordance with the image signal.

**21.** A liquid crystal television receiver, comprising:

the display device, as set forth in any one of claims 1 and 18, whose display section (14) is a liquid crystal panel (21); and
a tuner section for selecting a channel of a television broadcasting signal to convey a television image signal of the channel thus selected to the control section, wherein the control section of the display device is designed to generate the display signal in accordance with the television image signal.

**22.** A method of displaying an image with use of a liquid crystal display device by dividing a single frame into two sub-frames as first and second sub-frames, said method comprising an outputting step for generating a first display signal in the first sub-frame and a second display signal in the second sub-frame so that division of the frame does not vary a total luminance outputted from the display section in a single frame and for outputting the first and second display signals to the display section, wherein
the outputting step is such that:

a luminance gradation of the first display signal is adjusted and a luminance gradation of the second display signal is set to a minimum value or a value smaller than a first predetermined value for displaying an image whose brightness is relatively low, and
the luminance gradation of the first display signal is set to a maximum value or a value larger than a second predetermined value and the luminance gradation of the second display signal is adjusted for displaying an image whose brightness is relatively high, **characterised in that**
the frame is divided such that the period corresponding to the second sub-frame is longer than the period corresponding to the first sub-frame, and such that a ratio of a period corresponding to the first sub-frame and a period corresponding to the second sub-frame is 1 : n, wherein n is an actual number more than 1, such that the difference between the expected brightness and the actual brightness at a viewing angle is suppressed.

**23.** A method of displaying an image with use of a liquid crystal display device according to claim 22, wherein
the first and second display signals are output to the display section at a doubled clock.

**24.** The method of displaying an image with use of a liquid crystal display device as set forth in claim 23, wherein n is a natural number ranging from 3 to 7.

**25.** The liquid crystal display device as set forth in claim 1, wherein
the first predetermined value is 0.02% of the maximum gradation.

**Patentansprüche**

**1.** Flüssigkristallanzeigegerät, wobei ein einzelner Frame in einen ersten und zweiten Subframe aufgeteilt ist, um ein Bild anzuzeigen, wobei das Anzeigegerät Folgendes umfasst:

einen Anzeigeabschnitt (14) zum Anzeigen eines Bildes, dessen Luminanz auf einerLuminanzgradationeines Anzeigesignals basiert; und

einen Steuerungsabschnitt (15) zum Erzeugen eines ersten Anzeigesignals im ersten Subframe und eines zweiten Anzeigesignals im zweiten Subframe, sodass eine Aufteilung des Frames nicht eine gesamte Luminanz verändert, die vom Anzeigeabschnitt in einem einzelnen Frame ausgegeben wird, und zum Ausgeben des ersten und zweiten Anzeigesignals auf den Anzeigeabschnitt, wobei

der Steuerungsabschnitt (15) ausgelegt ist, um eine Luminanzgradation des ersten Anzeigesignals anzupassen und eine Luminanzgradation des zweiten Anzeigesignals auf einen Mindestwert oder einen Wert einzustellen, der kleiner ist als ein erster vorbestimmter Wert, um ein Bild anzuzeigen, dessen Helligkeit relativ gering ist, und der Steuerungsabschnitt (15) ausgelegt ist, um die Luminanzgradation des ersten Anzeigesignals auf einen Höchstwert oder einen Wert einzustellen, der größer ist als ein zweiter vorbestimmter Wert und die Luminanzgradation des zweiten Anzeigesignals anzupassen, um ein Bild anzuzeigen, dessen Helligkeit relativ groß ist, **dadurch gekennzeichnet dass**

der Steuerungsabschnitt (15) ausgelegt ist, um den Frame so aufzuteilen, dass die Periode, die dem zweiten Subframe entspricht, länger ist als die Periode, die dem ersten Subframe entspricht, und derart dass ein Verhältnis von einer Periode, die dem ersten Subframe entspricht, und einer Periode, die dem zweiten Subframe entspricht 1 : n ist, wobei n eine reelle Zahl größer als 1 ist, sodass der Unterschied zwischen der erwarteten Helligkeit und der tatsächlichen Helligkeit an einem Sichtwinkel unterdrückt wird.

2. Flüssigkristallanzeigegerät nach Anspruch 1, wobei n in einem Bereich von nicht mehr als 7 ist.

3. Flüssigkristallanzeigegerät nach Anspruch 1, wobei der zweite vorbestimmte Wert 80% der maximalen Gradation ist.

4. Flüssigkristallanzeigegerät nach Anspruch 1, wobei:

n eine Ganzzahl ist, und
der Steuerungsabschnitt (15) Lt berechnet, das dargestellt wird durch

$$Lt = (1/(n+1)) \, \hat{} \, (1/\gamma) \times Lmax$$

gemäß (i) einer maximalen LuminanzLmax eines Bildes,

das in einem einzelnen Frame angezeigt wird und (ii) eines vorbestimmten Werts$\gamma$, und
der Steuerungsabschnitt (15) bestimmt, ob eine Frame-Gradation L, die auf eine Luminanzgradation eines Anzeigesignals in einer normalen gehaltenen Anzeige größer als Lt ist oder nicht, und
der Steuerungsabschnitt (15) eine Luminanzgradation F des zweiten Anzeigesignals auf ein Minimum (0) einstellt und eine Luminanzgradation R des ersten Anzeigesignals so einstellt, dass

$$R = (1/(n+1)) \, \hat{} \, (1/\gamma) \times L$$

wenn die Frame-Gradation L nicht größer als Lt ist, und
der Steuerungsabschnitt (15) die Luminanzgradation R des ersten Anzeigesignals auf ein Maximum einstellt und die Luminanzgradation F des zweiten Anzeigesignals so einstellt, dass

$$F = ((L \, \hat{} \, \gamma - (1/(n+1)) \times Lmax \, \hat{} \, \gamma)) \, \hat{} \, (1/\gamma)$$

wenn die Frame-Gradation L größer als Lt ist.

5. Flüssigkristallanzeigegerät nach Anspruch 1, wobei
der Steuerungsabschnitt (15) so gestaltet ist, um abwechselnd das erste Anzeigesignal und das zweite Anzeigesignal auf den Anzeigeabschnitt mit einem Unterschied eines 1/(n+1) Zyklus auszugeben.

**6.** Flüssigkristallanzeigegerät nach Anspruch 1, wobei der Anzeigeabschnitt (15) ausgelegt ist, um ein Flüssigkristall-Panel (21) dazu zu veranlassen ein Bild anzuzeigen.

**7.** Flüssigkristallanzeigegerät nach Anspruch 6, wobei das Flüssigkristall-Panel (21) im VA-Modus ist.

**8.** Flüssigkristallanzeigegerät nach Anspruch 6, wobei das Flüssigkristall-Panel (21) normalerweise schwarz ist.

**9.** Flüssigkristallanzeigegerät nach Anspruch 6, wobei
der Steuerungsabschnitt gestaltet ist, um zu bestimmen, ob eine Flüssigkristall-Reaktionsgeschwindigkeit des Flüssigkristall-Panels (21) die Bedingungen (c) und (d) erfüllt oder nicht, und der Steuerungsabschnitt (15) ausgelegt ist, um eine normale gehaltene Anzeige auszuführen, wenn die Bedingungen (c) und (d) nicht erfüllt sind,
wobei die Bedingungen (c) und (d) wie folgt lauten:

(c) wenn ein Spannungssignal zum Maximieren einer Helligkeit für ein Flüssigkristall bereitgestellt wird, das ein Bild anzeigt, dessen Helligkeit auf ein Minimum eingestellt ist, erreicht eine Spannung des Flüssigkristalls einen Wert, der nicht geringer als 90% einer Spannung des Spannungssignals innerhalb der Periode ist, die dem ersten Subframe entspricht, und

(d) wenn ein Spannungssignal zum Minimieren einer Helligkeit für ein Flüssigkristall bereitgestellt wird, das ein Bild anzeigt, dessen Helligkeit auf ein Maximum eingestellt ist, erreicht eine Spannung des Flüssigkristalls einen Wert, der nicht mehr als 5% einer Spannung des Spannungssignals innerhalb der Periode ist, die dem ersten Subframe entspricht.

**10.** Flüssigkristallanzeigegerät nach Anspruch 6, wobei der Steuerungsabschnitt (15) gestaltet ist, um die Polaritäten einer Spannung, die auf das Flüssigkeitskristall angelegt ist, miteinander im ersten und zweiten Subframe auszugleichen und
wobei der Steuerungsabschnitt gestaltet ist, um die Polaritäten der Spannung zwischen nebeneinander liegenden Frames voneinander zu unterscheiden.

**11.** Flüssigkristallanzeigegerät nach Anspruch 6, wobei
der Steuerungsabschnitt (15) gestaltet ist, um Polaritäten einer Spannung, die auf das Flüssigkeitskristall angelegt ist, zwischen zwei Subframes in einem einzelnen Frame voneinander zu unterscheiden, und wobei der Steuerungsabschnitt gestaltet ist, um die Polaritäten der Spannung miteinander in einem ersten Subframe eines einzelnen Frames und einem zweiten Subframe eines anderen Frames neben dem ersten Subframe auszugleichen.

**12.** Flüssigkristallanzeigegerät nach Anspruch 1, wobei:
der Steuerungsabschnitt (15) so eingestellt ist, um das Anzeigesignal mithilfe von (i) einem Bildsignal, das von einer Außenseite eingespeist wird, und (ii) jeder von Beziehungstabellen, die auf eine Beziehung zwischen dem Bildsignal und dem Anzeigesignal hinweisen, zu generieren, und
die Beziehungstabellen mehrfach bereitgestellt werden, um Temperaturbereiche, die sich voneinander unterscheiden, abzudecken, und
der Steuerungsabschnitt (15) so gestaltet ist, um eine Beziehungstabelle, die einer Umgebungstemperatur entspricht, auszuwählen und die somit gewählte Beziehungstabelle zu verwenden.

**13.** Flüssigkristallanzeigegerät nach Anspruch 6, wobei der Steuerungsabschnitt (15) so gestaltet ist, um eine Polarität der Spannung, die auf das Flüssigkristall bei einem Frame-Zyklus angelegt wird, zu variieren.

**14.** Flüssigkristallanzeigegerät nach Anspruch 1, wobei
der Steuerungsabschnitt (15) gestaltet ist, um die Luminanzgradationen der Subpixel so einzustellen, dass der Gesamtwert der Luminanzen, die von beiden Subpixeln ausgegeben werden, eine Luminanz ist, die dem Anzeigesignal entspricht.

**15.** Flüssigkristallanzeigegerät nach Anspruch 1, wobei
die Subpixel mit Hilfslinien verbunden sind, die sich voneinander unterscheiden, und wobei jedes der Subpixel Folgendes umfasst:

einen Pixel-Kondensator;
ein Schaltelement zum Anwenden eines Anzeigesignals, das auf die Quellleitung angewandt wurde, auf den Pixel-Kondensator, wenn die Gate-Leitung auf AN gestellt wird; und

einen Hilfskondensator, der mit dem Pixel-Kondensator und jeder der Hilfsleitungen verbunden ist, und wobei der Steuerungsabschnitt (15) ausgelegt ist, um Hilfssignale, die in den Hilfsleitungen fließen, die mit den Subpixeln verbunden sind, voneinander zu unterscheiden, um die Spannungen, die jeweils auf den Pixel-Kondensator des Subpixels angelegt werden, voneinander zu unterscheiden.

16. Flüssigkristallanzeigegerät nach Anspruch 1, wobei
der Anzeigeabschnitt (14) ausgelegt ist, um ein Flüssigkristall-Panel (21) zu veranlassen, ein Bild anzuzeigen, und der Steuerungsabschnitt (15) ausgelegt ist, um eine Polarität einer Spannung, die auf das Flüssigkristall des Subpixels bei einem Frame-Zyklus angelegt wird, zu variieren.

17. Flüssigkristallanzeigegerät nach Anspruch 16, wobei
der Steuerungsabschnitt (15) gestaltet ist, um eine Phase jedes der Hilfssignale beim Frame-Zyklus zu invertieren.

18. Flüssigkristallanzeigegerät nach Anspruch 1, wobei
das erste und zweite Anzeigesignal auf den Anzeigeabschnitt (4) mit doppeltem Takt ausgegeben werden.

19. Flüssigkristallanzeigegerät nach Anspruch 18, wobei n eine natürliche Zahl in einem Bereich von 3 bis 7 ist.

20. Flüssigkristallmonitor, der Folgendes umfasst:

das Anzeigegerät nach einem der Ansprüche 1 und 18, dessen Anzeigeabschnitt ein Flüssigkristall-Panel (21) ist; und
ein Signaleingangsabschnitt zum Übertragen eines Bildsignals an den Steuerungsabschnitt (15), wobei der Steuerungsabschnitt des Anzeigegeräts gestaltet ist, um das Anzeigesignal gemäß dem Bildsignal zu generieren.

21. Flüssigkristall-Fernsehempfänger, der Folgendes umfasst:

das Anzeigegerät nach einem der Ansprüche 1 und 18, dessen Anzeigeabschnitt (14) ein Flüssigkristall-Panel (21) ist; und
einen Tuner-Abschnitt zum Auswählen eines Kanals eines Fernsehrundfunksignals, um ein Fernsehbildsignal des Kanals, das somit ausgewählt wird, auf den Steuerungsabschnitt zu übertragen, wobei der Steuerungsabschnitt des Anzeigegeräts gestaltet ist, um das Anzeigesignal gemäß dem Fernsehbildsignal zu generieren.

22. Verfahren zum Anzeigen eines Bildes mithilfe eines Flüssigkristallanzeigegeräts durch Aufteilen eines einzelnen Frames in zwei Subframes als einen ersten und zweiten Subframe, wobei das Verfahren einen Ausgabeschritt zum Generieren eines ersten Anzeigesignals in dem ersten Subframe und eines zweiten Anzeigesignals in dem zweiten Subframe umfasst, sodass eine Aufteilung des Frames nicht eine gesamte Luminanz verändert, die vom Anzeigeabschnitt in einem einzelnen Frame ausgegeben wird, und zum Ausgeben des ersten und zweiten Anzeigesignals auf den Anzeigeabschnitt, wobei
der Ausgabeschritt derart ist, dass:

eine Luminanzgradation des ersten Anzeigesignals angepasst wird und eine Luminanzgradation des zweiten Anzeigesignal auf einen Mindestwert oder einen Wert eingestellt wird, der kleiner ist als ein erster vorbestimmter Wert, um ein Bild anzuzeigen, dessen Helligkeit relativ gering ist, und
die Luminanzgradation des ersten Anzeigesignals auf einen Höchstwert oder einen Wert eingestellt wird, der größer ist als ein zweiter vorbestimmter Wert und die Luminanzgradation des zweiten Anzeigesignals angepasst wird, um ein Bild anzuzeigen, dessen Helligkeit relativ groß ist, **dadurch gekennzeichnet dass**
der Frame so aufgeteilt ist, dass die Periode, die dem zweiten Subframe entspricht, länger ist als die Periode, die dem ersten Subframe entspricht, und derart, dass ein Verhältnis von einer Periode, die dem ersten Subframe entspricht, und einer Periode, die dem zweiten Subframe entspricht 1 : n ist, wobei n eine reale Zahl größer als 1 ist, sodass der Unterschied zwischen der erwarteten Helligkeit und der tatsächlichen Helligkeit an einem Sichtwinkel unterdrückt wird.

23. Verfahren zum Anzeigen eines Bildes mithilfe eines Flüssigkristallanzeigegeräts nach Anspruch 22, wobei
das erste und zweite Anzeigesignal auf den Anzeigeabschnitt mit einem doppelten Takt ausgegeben werden.

24. Verfahren zum Anzeigen eines Bildes mithilfe eines Flüssigkristallanzeigegeräts nach Anspruch 23, wobei n eine natürliche Zahl in einem Bereich von 3 bis 7 ist.

**25.** Flüssigkristallanzeigegerät nach Anspruch 1, wobei
der erste vorbestimmte Wert 0,02% der maximalen Gradation ist.

**Revendications**

**1.** Dispositif d'affichage à cristaux liquides, étant précisé qu'une même trame est divisée en une première sous-trame et une seconde sous-trame de manière à afficher une image, le dispositif d'affichage comprenant :

une section d'affichage (14) pour afficher une image dont la luminance est basée sur une gradation de luminance d'un signal d'affichage ; et
une section de commande (15) pour générer un premier signal d'affichage dans la première sous-trame et un second signal d'affichage dans la seconde sous-trame de sorte que la division de la trame ne fait pas varier une luminance totale émise à partir de la section d'affichage dans une même trame, et pour émettre les premier et second signaux vers la section d'affichage, étant précisé
que la section de commande (15) est apte à ajuster une gradation de luminance du premier signal d'affichage et à fixer une gradation de luminance du second signal d'affichage à une valeur minimum ou à une valeur inférieure à une première valeur prédéterminée, pour afficher une image dont la brillance est relativement faible, et
que la section de commande (15) est apte à fixer la gradation de luminance du premier signal d'affichage à une valeur maximum ou à une valeur supérieure à une seconde valeur prédéterminée, et à ajuster la gradation de luminance du second signal d'affichage pour afficher une image dont la brillance est relativement élevée,
**caractérisé en ce que** la section de commande (15) est apte à diviser la trame de telle sorte que la période correspondant à la seconde sous-trame soit plus longue que la période correspondant à la première sous-trame et de telle sorte qu'un rapport d'une période correspondant à la première sous-trame et d'une période correspondant à la seconde sous-trame soit de 1:n, étant précisé que n est un nombre réel supérieur à 1, de sorte que la différence entre la brillance attendue et la brillance réelle suivant un angle de vision est supprimée.

**2.** Dispositif d'affichage à cristaux liquides tel qu'il est présenté dans la revendication 1, étant précisé que n est situé dans une plage qui ne dépasse pas 7.

**3.** Dispositif d'affichage à cristaux liquides tel qu'il est présenté dans la revendication 1, étant précisé que la seconde valeur prédéterminée représente 80 % de la gradation maximum.

**4.** Dispositif d'affichage à cristaux liquides tel qu'il est présenté dans la revendication 1, étant précisé :

que n est un nombre entier, et
que la section de commande (15) calcule Lt, représenté par

$$Lt = (1/(n+1))^{(1/\gamma)} \times Lmax,$$

selon (i) une luminance maximum Lmax d'une image affichée dans une même trame et (ii) une valeur $\gamma$ prédéterminée, et
que la section de commande (15) détermine si une gradation de trame L indiquant une gradation de luminance d'un signal d'affichage dans un affichage de maintien normal n'est pas supérieure à Lt, et
que la section de commande (15) fixe une gradation de luminance F du second signal d'affichage pour qu'elle soit minimum (0), et fixe une gradation de luminance R du premier signal d'affichage de sorte que

$$R = (1/(n+1))^{(1/\gamma)} \times L$$

quand la gradation de trame L n'est pas supérieure à Lt, et
que la section de commande (15) fixe la gradation de luminance R du premier signal d'affichage pour qu'elle soit maximum, et fixe la gradation de luminance F du second signal d'affichage de sorte que

$$F=((L^\gamma-(1/(n+1))\times Lmax^\gamma))^{(1/\gamma)}$$

quand la gradation de trame L est supérieure à Lt.

5. Dispositif d'affichage à cristaux liquides tel qu'il est présenté dans la revendication 1, étant précisé que la section de commande (15) est conçue de manière à émettre en alternance le premier signal d'affichage et le second signal d'affichage vers la section d'affichage avec une différence de 1/(n+1) cycle.

6. Dispositif d'affichage à cristaux liquides tel qu'il est présenté dans la revendication 1, étant précisé que la section de commande (15) est apte à amener un panneau à cristaux liquides (21) à afficher une image.

7. Dispositif d'affichage à cristaux liquides tel qu'il est présenté dans la revendication 6, étant précisé que le panneau à cristaux liquides (21) est en mode VA (alignement vertical).

8. Dispositif d'affichage à cristaux liquides tel qu'il est présenté dans la revendication 6, étant précisé que le panneau à cristaux liquides (21) est normalement noir.

9. Dispositif d'affichage à cristaux liquides tel qu'il est présenté dans la revendication 6, étant précisé que la section de commande est conçue pour déterminer si une vitesse de réponse des cristaux liquides du panneau à cristaux liquides (21) remplit ou non les conditions (c) et (d), et que la section de commande (15) est apte à réaliser un affichage de maintien normal quand les conditions (c) et (d) ne sont pas remplies, lesdites conditions (c) et (d) étant les suivantes :

   (c) quand un signal de tension qui maximalise une brillance est fourni à un cristal liquide affichant une image dont la brillance est minimum, une tension du cristal liquide atteint une valeur non inférieure à 90 % d'une tension du signal de tension à l'intérieur de la période correspondant à la première sous-trame, et
   (d) quand un signal de tension qui minimalise une brillance est fourni à un cristal liquide affichant une image dont la brillance est maximum, une tension du cristal liquide atteint une valeur non supérieure à 5 % d'une tension du signal de tension à l'intérieur de la période correspondant à la première sous-trame.

10. Dispositif d'affichage à cristaux liquides tel qu'il est présenté dans la revendication 6, étant précisé que la section de commande (15) est conçue pour rendre égales les polarités d'une tension, appliquée au cristal liquide, l'une à l'autre dans les première et seconde sous-trames, et que la section de commande est conçue pour différencier les polarités de la tension entre des trames voisines.

11. Dispositif d'affichage à cristaux liquides tel qu'il est présenté dans la revendication 6, étant précisé que la section de commande (15) est conçue pour différencier les polarités d'une tension, appliquées au cristal liquide, l'une de l'autre entre deux sous-trames dans une même trame, et que la section de commande est conçue pour rendre égales les polarités de la tension l'une à l'autre dans une première sous-trame d'une même trame et dans une seconde sous-trame d'une autre trame voisine de la première sous-trame.

12. Dispositif d'affichage à cristaux liquides tel qu'il est présenté dans la revendication 1, étant précisé :
   que la section de commande (15) est réglée de manière à générer le signal d'affichage en utilisant (i) un signal d'image entré à partir d'un côté extérieur et (ii) chacune des tables de correspondances indiquant une relation entre le signal d'image et le signal d'affichage, et
   que les tables de correspondances sont prévues en un certain nombre, de manière à couvrir des plages de température différentes, et
   que la section de commande (15) est conçue pour sélectionner une table de correspondances correspondant à une température environnante et pour utiliser la table ainsi sélectionnée.

13. Dispositif d'affichage à cristaux liquides tel qu'il est présenté dans la revendication 6, étant précisé que la section de commande (15) est conçue pour faire varier une polarité d'une tension appliquée au cristal liquide selon un cycle de trame.

14. Dispositif d'affichage à cristaux liquides tel qu'il est présenté dans la revendication 1, étant précisé que la section de commande (15) est conçue pour fixer des gradations de luminance des sous-pixels de sorte qu'une valeur totale de luminances émises à partir des deux sous-pixels soit une luminance correspondant au signal d'affichage.

**15.** Dispositif d'affichage à cristaux liquides tel qu'il est présenté dans la revendication 1, étant précisé que les sous-pixels sont reliés à des lignes auxiliaires différentes, et que chacun des sous-pixels continent :

un condensateur de pixel ;
un élément de commutation pour appliquer un signal d'affichage, qui a été appliqué à la ligne de source, au condensateur de pixel quand la ligne de porte se met en marche ; et
un condensateur auxiliaire relié au condensateur et à chacune des lignes auxiliaires, et
que la section de commande (15) est apte à différencier les uns des autres les signaux auxiliaires qui passent dans les lignes auxiliaires reliées aux sous-pixels, de manière à différencier les unes des autres les tensions appliquées chacune au condensateur de pixel du sous-pixel.

**16.** Dispositif d'affichage à cristaux liquides tel qu'il est présenté dans la revendication 1, étant précisé que la section d'affichage (14) est apte à amener un panneau à cristaux liquides (21) à afficher une image, et que la section de commande (15) est apte à faire varier une polarité d'une tension appliquée au cristal liquide du sous-pixel suivant un cycle de trame.

**17.** Dispositif d'affichage à cristaux liquides tel qu'il est présenté dans la revendication 16, étant précisé que la section de commande (15) est conçue pour inverser une phase de chacun des signaux auxiliaires suivant le cycle de trame.

**18.** Dispositif d'affichage à cristaux liquides selon la revendication 1, étant précisé que les premier et second signaux d'affichage sont émis vers la section d'affichage (4) à un rythme d'horloge double.

**19.** Dispositif d'affichage à cristaux liquides tel qu'il est présenté dans la revendication 18, étant précisé que n est un entier naturel qui va de 3 à 7.

**20.** Moniteur à cristaux liquides comprenant :

le dispositif d'affichage tel qu'il est présenté dans l'une quelconque des revendications 1 et 18, dont la section d'affichage est un panneau à cristaux liquides (21) ; et
une section d'entrée de signaux pour acheminer un signal d'image jusqu'à la section de commande (15), étant précisé que la section de commande du dispositif d'affichage est conçue pour générer le signal d'affichage selon le signal d'image.

**21.** Téléviseur à cristaux liquides, comprenant :

le dispositif d'affichage tel qu'il est présenté dans l'une quelconque des revendications 1 et 18, dont la section d'affichage (14) est un panneau à cristaux liquides (21) ; et
une section de syntonisation pour sélectionner un canal d'un signal d'image de diffusion télévisuelle afin d'acheminer un signal d'image de télévision du canal ainsi sélectionné jusqu'à la section de commande, étant précisé que la section de commande du dispositif d'affichage est conçue pour générer le signal d'affichage selon le signal d'image de télévision.

**22.** Procédé pour afficher une image à l'aide d'un dispositif d'affichage à cristaux liquides en divisant une même trame en deux sous-trames sous la forme de première et seconde sous-trames, le procédé comprenant une étape d'émission pour générer un premier signal d'affichage dans la première sous-trame et un second signal d'affichage dans la seconde sous-trame de sorte que la division de la trame ne fait pas varier une luminance totale émise à partir de la section d'affichage dans une même trame, et pour émettre les premier et second signaux vers la section d'affichage, étant précisé
qu'une gradation de luminance du premier signal d'affichage est ajustée et qu'une gradation de luminance du second signal d'affichage est fixée à une valeur minimum ou à une valeur inférieure à une première valeur prédéterminée, pour afficher une image dont la brillance est relativement faible, et
que la gradation de luminance du premier signal d'affichage est fixée à une valeur maximum ou à une valeur supérieure à une seconde valeur prédéterminée, et que la gradation de luminance du second signal d'affichage est ajustée pour afficher une image dont la brillance est relativement élevée,
**caractérisé en ce que** la trame est divisée de telle sorte que la période correspondant à la seconde sous-trame soit plus longue que la période correspondant à la première sous-trame et de telle sorte qu'un rapport d'une période correspondant à la première sous-trame et d'une période correspondant à la seconde sous-trame soit de l:n, étant précisé que n est un nombre réel supérieur à 1, de sorte que la différence entre la brillance attendue et la brillance réelle suivant un angle de vision est supprimée.

23. Procédé pour afficher une image à l'aide d'un dispositif d'affichage à cristaux liquides selon la revendication 22, étant précisé que les premier et second signaux d'affichage sont émis vers la section d'affichage à un rythme d'horloge double.

24. Procédé pour afficher une image à l'aide d'un dispositif d'affichage à cristaux liquides selon la revendication 23, étant précisé que n est un entier naturel qui va de 3 à 7.

25. Dispositif d'affichage à cristaux liquides tel qu'il est présenté dans la revendication 1, étant précisé que la première valeur prédéterminée représente 0,02% de la gradation maximum.

## FIG. 1

RGB SIGNAL → F. M. (11) → CONTROL SECTION (15) → GATE DRIVER (22) / SOURCE DRIVER (23) / LIQUID CRYSTAL PANEL (21) [14]

CONTROL SECTION (15) → FORMER STAGE LUT (12)

CONTROL SECTION (15) → LATTER STAGE LUT (13)

FIG. 2

FIG. 3

FIG. 4

1 FRAME

( a )

| 1 | 2 | 3 | 4 | 5 | INPUT

( b )

| 1 | 2 | 3 | 4 | 5 |

OUTPUT

( c )

| 1 | 2 | 3 | 4 | 5 |

3/4 FRAME

UPPER AND LOWER IMAGE SIGNALS
ARE ALTERNATELY OUTPUTTED AT
A DOUBLED FREQUENCY

FIG. 5

3/4 FRAME

LATTER STAGE
DISPLAY SIGNAL

GATE OUTPUT
DIRECTION

ALTERNATELY

FORMER STAGE
DISPLAY SIGNAL

LIQUID
CRYSTAL
PANEL
a × b

21

1 FRAME

TIME

FIG. 6

EXPECTED BRIGHTNESS

FIG. 7

EXPECTED BRIGHTNESS

FIG. 8

16 TEMPERATURE SENSOR

11 RGB SIGNAL → F. M.

15 CONTROL SECTION

14 DISPLAY SECTION

12a FORMER STAGE LUT
12b FORMER STAGE LUT
12c FORMER STAGE LUT

13a LATTER STAGE LUT
13b LATTER STAGE LUT
13c LATTER STAGE LUT

EP 1 564 714 B1

FIG. 9 (a)

VOLTAGE POLARITY + + − − + + − − + +

LUMINANCE

1 FRAME

FIG. 9 (b)

VOLTAGE POLARITY − + + − − + + − − +

LUMINANCE

1 FRAME

FIG. 10 (a)

VOLTAGE

1 FRAME

FIG. 10 (b)

VOLTAGE

X

1 FRAME

FIG. 10 (c)

VOLTAGE

X

1 FRAME

FIG. 11

RESPONSE FAILURE RESULTS
IN THIS EXCESS BRIGHTNESS

FRONT
60° (SUB-FRAME DISPLAY)
60° (NORMAL HOLD DISPLAY)

ACTUAL LUMINANCE

EXPECTED LUMINANCE

## FIG. 12 (a)

L=Lmax·3/4

L=Lmax·1/4

LUMINANCE

3/4 Lmax IS EXPRESSED
IN 2 SUB-FRAMES

1/4 Lmax IS EXPRESSED
IN 2 SUB-FRAMES

## FIG. 12 (b)

VOLTAGE
POLARITY

+   −   +   −     +   −   +   −

LIQUID CRYSTAL
VOLTAGE

0

FRAME

EP 1 564 714 B1

FIG. 13 (a)

L=Lmax·1/4                    L=Lmax·3/4

VOLTAGE POLARITY    + + − −              + + − −

LIQUID CRYSTAL VOLTAGE

0

FRAME

FIG. 13 (b)

VOLTAGE POLARITY    + − − +              + − − +

LIQUID CRYSTAL VOLTAGE

0

FRAME

EP 1 564 714 B1

FIG. 14 (a)   FIG. 14 (b)   FIG. 14 (c)   FIG. 14 (d)

| + | − |
|---|---|
| − | **+** |

| − | + |
|---|---|
| + | **−** |

| + | − |
|---|---|
| − | **+** |

| − | + |
|---|---|
| + | **−** |

FIG. 15

FIG. 16 (a)

V0

Vd

CS1

Vcs

Vcom

GATE OFF PERIOD

GATE ON
PERIOD

FIG. 16 (b)

CS1

ON          OFF

Vcom

−V1

Vd    Vcs

FIG. 16 (c)

V0

Vd

CS2

Vcs

Vcom

ON          OFF

FIG. 16 (d)

CS2

ON          OFF

Vcom

−V1

Vd    Vcs

FIG. 17

FIG. 18 (a)

FRAME

VOLTAGE
POLARITY

+ + − −

FIG. 18 (b)

BRIGHT PIXEL

VOLTAGE ↑+ ↑+ ↓− ↓−

OFFSET

OFFSET

FIG. 18 (c)

DARK PIXEL

VOLTAGE ↓+ ↓+ ↑− ↑−

FIG. 19 (a)   BRIGHT PIXEL

FIG. 19 (b)   DARK PIXEL

FIG. 20 (a)   BRIGHT PIXEL

FIG. 20 (b)   DARK PIXEL

FIG. 21

ACTUAL LUMINANCE

EXPECTED LUMINANCE

FRONT
60° (SUB-FRAME DISPLAY +
PIXEL-DIVISION DRIVING)
60° (NORMAL HOLD DISPLAY)

FIG. 22 (a)

BRIGHT PIXEL

FIG. 22 (b)

DARK PIXEL

FIG. 23

DIVISIONAL RATIO 1 : 1 : 1

ACTUAL LUMINANCE

EXPECTED LUMINANCE

FRONT
60° (THREE-SUB-FRAME DISPLAY)
60° (NORMAL HOLD DISPLAY)

FIG. 24

LIQUID CRYSTAL
VOLTAGE

0V

VOLTAGE
POLARITY

| + | + | + | − | − | − |

FRAME

FRAME

FIG. 25

LIQUID CRYSTAL
VOLTAGE

0V

VOLTAGE
POLARITY

| + | − | + | − | + | − |

FRAME

FRAME

FIG. 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004013391 A
- JP 2005012329 A
- JP TOKUKAI200223707 B
- JP TOKUKAIHEI05682211993 B
- JP TOKUKAI2001296841 B
- JP TOKUKAI200478157 B
- JP TOKUKAI2003295160 B
- JP TOKUKAI200462146 B
- JP TOKUKAI2004258139 B
- US 2003006952 A

**Non-patent literature cited in the description**

- Color Science Handbook. University of Tokyo Press, 10 June 1998